# EUROPEAN PATENT APPLICATION

(11) **EP 4 676 109 A1**
(43) Date of publication of application: **07.01.2026**
(21) Application number: 25185173.9
(22) Date of filing: 25.06.2025
(51) Int. Cl.: H04W 12/047, H04W 12/50

(54) **COMMUNICATION APPARATUS, CONTROL METHOD, AND COMPUTER PROGRAM**

(30) Priority: 03.07.2024 JP 2024107640
(71) Applicant: CANON KABUSHIKI KAISHA, Tokyo 146-8501 (JP)
(72) Inventor: YOSHIKAWA, Yuki, Tokyo, 146-8501 (JP)
(74) Representative: Canon Europe Limited

(57) **Abstract**

A communication apparatus that executes a wireless communication method compliant with a Wi-Fi Direct standard detects an existence of an other communication apparatus using a first detection method using a Probe Request frame and a second detection method using a Service Discovery Frame; and establishes a connection with the detected other communication apparatus using a first establishing process associated with the first detection method or a second establishing process associated with the second detection method, wherein, in a case where the first establishing process supports a first security method and the second establishing process supports a second security method, the first detection method is executed based on the first security method being set in the communication apparatus, and the second detection method is executed based on the second security method being set in the communication apparatus.

## Description

### TECHNICAL FIELD

The present disclosure relates to a technique for establishing a communication link between a plurality of stations in a wireless communication system.

### BACKGROUND

In recent years, with increases in the amount of data communication, the development of wireless local area network (LAN) communication techniques has been proceeding. The Institute of Electrical and Electronic Engineers (IEEE) 802.11 series of standards are known as the main standard for wireless LAN. The IEEE 802.11 series of standards include standards such as IEEE 802.11a/b/g/n/ac/ax, and the like. For example, the latest standard IEEE 802.11ax is a standard for techniques that use OFDMA to have a high peak throughput of a maximum of 9.6 gigabits per second (Gbps), which improves the communication speed in a congested situation. OFDMA is an abbreviation for Orthogonal Frequency-Division Multiple Access.

Also, the Wi-Fi Alliance has established a program for authenticating wireless LAN devices. For example, the WFD standard is established in which communication parameters are exchanged between wireless LAN stations (STAs) and the process for establishing a communication link between STAs is set, without going through an access point (AP). WFD is an abbreviation for Wi-Fi Direct. As a new function of the WFD standard, using Service Discovery Frames (SDF) used in the Wi-Fi Aware standard is being looked into to reduce the amount of time from the discovery of a potential communication partner STA to connection. For example, Japanese Patent Laid-Open No. 2019-201427 describes detecting a communication terminal using the Wi-Fi Aware standard specifications.

### SUMMARY

The present disclosure provides a technique for increasing the user-friendliness for the user in a case where a plurality of different methods or processes are used in a method for detecting a partner STA among STAs and a process of establishing a connection with a partner STA.

The present disclosure in its first aspect provides a communication apparatus as specified in claim 1. Optional features are specified in claim 2 to 14.

The present disclosure in its second aspect provides a control method as specified in claim 15.

The present disclosure in its third aspect provides a computer program as specified in claim 16.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram illustrating an example configuration of a wireless communication system.
FIG. 2 is a diagram illustrating an example of a sequence between communication apparatuses in a first detection method.
FIG. 3 is a diagram illustrating an example of a sequence between communication apparatuses in a second detection method.
FIG. 4 is a diagram illustrating an example of a first establishing process between communication apparatuses.
FIG. 5 is a diagram illustrating an example of a second establishing process between communication apparatuses.
FIG. 6 is a diagram illustrating an example of the hardware configuration of a communication apparatus.
FIG. 7 is a diagram illustrating an example of the functional configuration of a communication apparatus.
FIG. 8 is a diagram illustrating an example of a sequence between communication apparatuses in a case where the first detection method and the second detection method are used in parallel.
FIG. 9 is a diagram illustrating an example of a sequence between communication apparatuses in a case where only the second detection method is used.

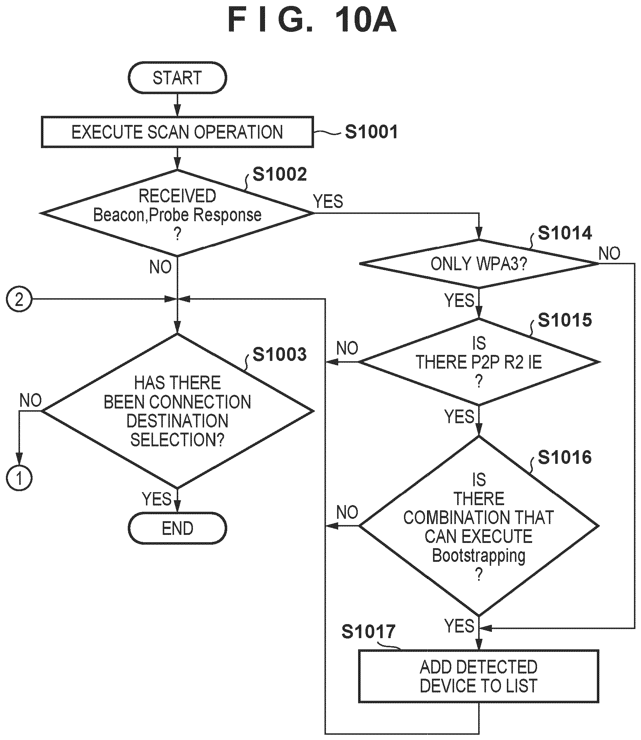

FIG. 10A is a diagram illustrating an example of the flow of processing executed by a communication apparatus.

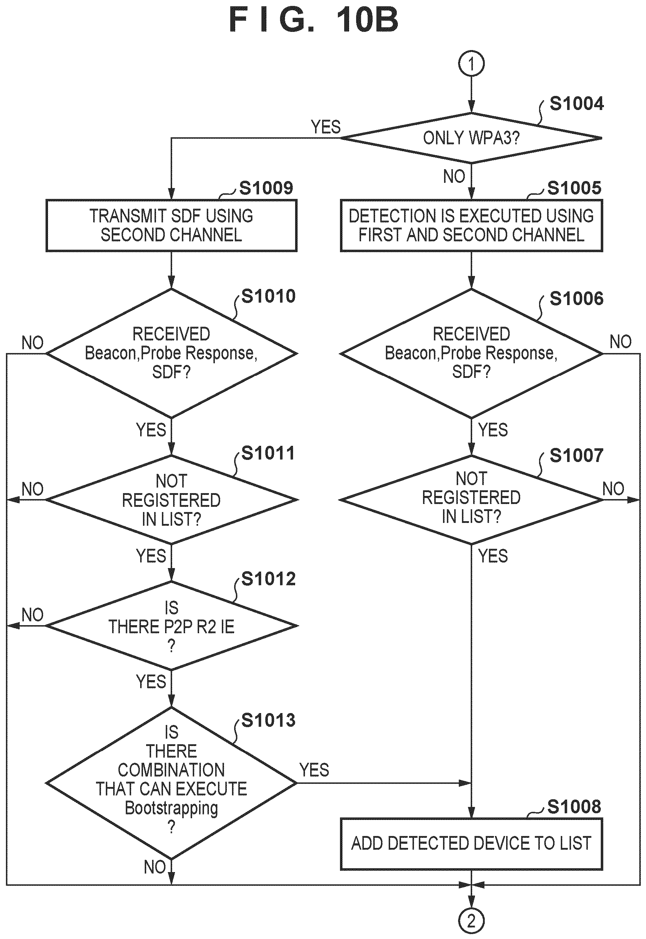

FIG. 10B is a diagram illustrating an example of the flow of processing executed by a communication apparatus.
FIG. 11 is a diagram illustrating an example of an establishing process between communication apparatuses.
FIG. 12 is a diagram illustrating an example of an SDF frame format.
FIG. 13 is a diagram illustrating an example of the configuration of a user interface for security settings.
FIG. 14 is a diagram illustrating an example of the configuration of a user interface for security settings.
FIG. 15 is a diagram illustrating an example of the configuration of a user interface for security settings.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### System Configuration

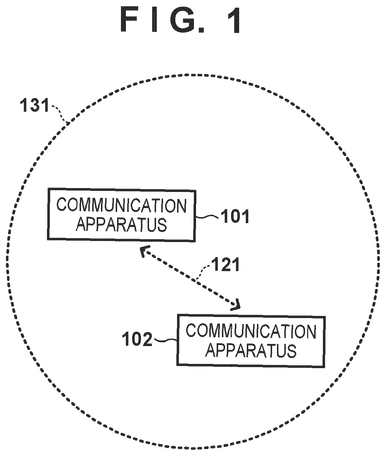

FIG. 1 illustrates an example configuration of a wireless communication system according to the present embodiment. The wireless communication system may include two or more communication apparatuses. The wireless communication system may include a communication apparatus 101 and a communication apparatus 102, for example. In the present embodiment, communication apparatus 100 may be used to refer to the communication apparatus 101 and the communication apparatus 102 without discriminating between the two. The communication apparatus 100 is a communication apparatus that can perform wireless communication that complies with the IEEE 802.11 standard series. For example, the communication apparatus 100 may include a function of a station (STA) that complies with the IEEE 802.11 standard series. Also, the communication apparatus 100 may include a function of an access point (AP) that complies with the IEEE 802.11 standard series. IEEE is an abbreviation for the Institute of Electrical and Electronics Engineers. The communication apparatus 101 and the communication apparatus 102 are connected via a wireless link 121. A network 131 formed by the communication apparatus 101 and the communication apparatus 102 represents the range in which the communication apparatus 101 and the communication apparatus 102 can communicate. In other words, in the range of the network 131, the communication apparatus 102 can receive a signal transmitted by the communication apparatus 101, and the communication apparatus 101 can receive a signal transmitted by the communication apparatus 102. In the network 131 of FIG. 1, two communication apparatuses 100 exist, but three or more communication apparatus 100 may exist. In such a case, each communication apparatus 100 may be connected to each other, or a plurality of other communication apparatuses 100 may be connected to one communication apparatus 100.

In the present embodiment, the communication apparatus 100 may be configured to execute a communication method that complies with the IEEE 802.11 standard series. For example, the communication apparatus 100 may be configured to execute a communication method that complies with the IEEE 802.11bn standard. Note that the IEEE 802.11bn standard is the successor of the IEEE 802.11be standard that has the goal of a maximum transmission speed of 46.08 Gbps (Gigabit per second). A main advantage of the IEEE 802.11bn standard is that it includes functions for achieving highly reliable communication, low latency communication, improved throughput when communication traffic is congested, and the like. The IEEE 802.11bn standard may be referred to as the UHR standard. UHR is an abbreviation for Ultra High Reliability. The communication apparatus 100 may execute a communication method that complies with successor standards of the IEEE 802.11bn standard. Also, the communication apparatus 100 may support at least one of the legacy standards, which are standards previous to the IEEE 802.11bn standard. Legacy standards include IEEE 802.11a/b/g/n/ac/ax/be, for example. The communication apparatus 100 may support a legacy standard and may not support the IEEE 802.11bn standard. Also, the communication apparatus 100 may support other communication standards, such as Bluetooth (registered trademark), NFC, UWB, ZigBee, MBOA, and the like. Note that UWB is an abbreviation for UltraWide Band, and MBOA is an abbreviation for Multi Band OFDM Alliance. Also, NFC is an abbreviation for Near Field Communication. UWB includes wireless USB, wireless 1394, WiNET, and the like. Also, the communication apparatus 100 may support wired LAN or similar communication standards. The communication apparatus 100 may be but is not limited to being a camera, a tablet, a smartphone, a PC, a mobile phone, a video camera, a headset, a printer, a display, or the like. The communication apparatus 100 may be an information processing apparatus such as a radio chip that can execute wireless communication that supports the IEEE 802.11bn standard and the like.

The communication apparatus 100 may communicate using frequency bands such as the 2.4 GHz band, the 3.6 GHz band, the 5 GHz band, the 6 GHz band, and millimeter wave bands such as the 45 GHz band and the 60 GHz band. The frequency band used by the communication apparatus 100 is not limited to these and may be the sub-1GHz band or the like, for example. Also, the communication apparatus 100 may communicate using a bandwidth of 20 MHz, 40 MHz, 80 MHz, 160 MHz, 320 MHz, 540 MHz, 640 MHz, 1080 MHz, or 2160 MHz. The bandwidth used by the communication apparatus 100 is not limited to these and may be a bandwidth of 240 MHz, 4 MHz, or the like, for example. Note that in the IEEE 802.11 standard series, as the basic channel in the 2.4 GHz band, the 5 GHz band, the 6 GHz band, or the like, using a frequency channel that uses a bandwidth of 20 MHz is specified. Also, in this standard, in each frequency band including the 2.4 GHz band, the 5 GHz band, and the 6 GHz band, a plurality of channels that can be used are defined. For example, in the 2.4 GHz band, three frequency channels, 1ch, 6ch, and 11ch, are specified as frequency channels with no overlap. Also, in this standard, a combination of a specific channel and an adjacent channel can be used. In the present embodiment, using a combination of a specific channel and an adjacent channel may be referred to as channel bonding. Also, a group of channels formed by one or two or more adjacent channels may be referred to as a communication link (link). In other words, one link formed by two channels with a bandwidth of 20 MHz uses a bandwidth of 40 MHz. The communication method in which a plurality of links are established between communication apparatuses and these links are used in parallel may be referred to as Multi-Link communication. The communication apparatus 100 may be a Multi-Link Device (MLD) that supports Multi-Link. In FIG. 1, one wireless link (link 121) is established between the communication apparatuses.

The communication apparatus 100 may include a function of establishing a communication link according to the Wi-Fi Direct (WFD) standard. The WFD standard specifies a process for establishing a communication link between a plurality of STAs without going through an AP. In other words, the communication apparatus 100 implementing the WFD standard may be a STA. For example, two or more communication apparatuses 100 may execute a process of detecting each other's existence according to a detection process specified in the WFD standard and establishing a connection between the detected partner communication apparatuses. For example, the communication apparatus 100 may detect the existence of another communication apparatus via a first detection method using a Probe Request frame and a Probe Response frame. The process of detecting another communication apparatus and establishing a communication link with the detected communication apparatus using the first detection method may be referred to as WFD R1. WFD R1 is an abbreviation for Wi-Fi Direct Release 1. Also, the communication apparatus 100 may detect the existence of another communication apparatus via a second detection method using a Service Discovery Frame (SDF). The process of detecting another communication apparatus and establishing a communication link with the detected communication apparatus using the second detection method may be referred to as WFD R2. WFD R2 is an abbreviation for Wi-Fi Direct Release 2.

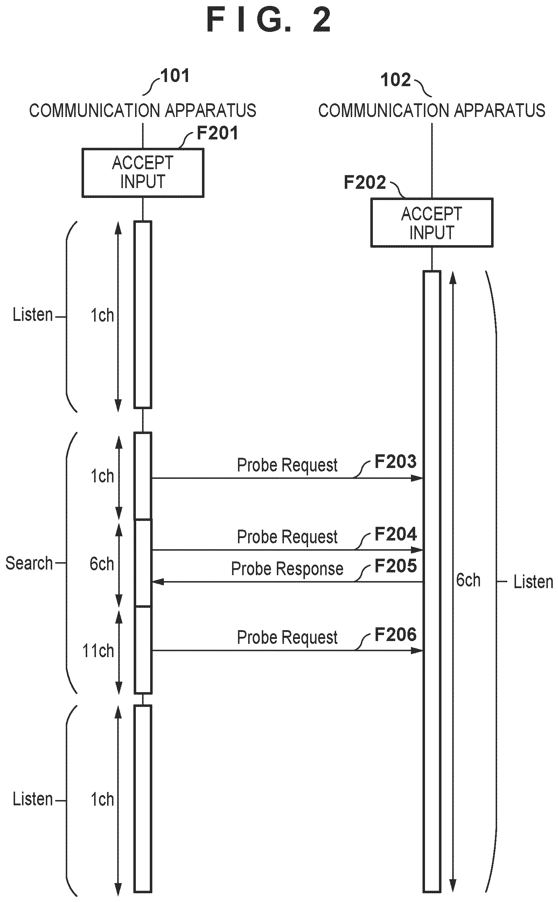

FIG. 2 illustrates an example of a sequence executed between the communication apparatuses 100 in the first detection method. In this example, the processing may be started at each communication apparatus 100 on the basis of an input from a user, application, or the like (F201, F202). When the communication apparatus 101 receives an instruction such as an instruction to detect another communication apparatus from the user or the like, the communication apparatus 101 attempts to detect another communication apparatus by repeating a Listen state and a Search state. The communication apparatus 101, in the Listen state, waits for a Probe Request frame in a specific frequency channel. In this case, when the communication apparatus 101 receives a Probe Request frame, the communication apparatus 101 responds with a Probe Response frame. In the Search state, the communication apparatus 101 transmits a Probe Request frame and waits for a Probe Response frame while switching the frequency channel between one or more predetermined frequency channels. For example, in the Listen state, the communication apparatus 101 selects 1ch of 2.4 GHz and waits for a Probe Request frame from another communication apparatus. The Listen state period may be a time period equal to N times a predetermined time period defined as a time unit TU. In other words, the time period during which the communication apparatus 101 executes the Listen state operation may be represented by N × TU. TU is an abbreviation for time unit. TU may be 100 milliseconds, for example. N may be an integer of 1 or more determined by random number. N may be a value predetermined by setting or the like or may be a different value for each frequency channel. When the communication apparatus 101 transitions from the Listen state to the Search state, the communication apparatus 101 transmits a Probe Request frame and waits for a Probe Response frame while switching between frequency channels (F203, F204, F206). The communication apparatus 101 may transition from the Search state to the Listen state again. In a case where the communication apparatus 101 transitions from the Search state to the Listen state again, a detection operation may be executed using the same or a different channel from the channel selected in the previous Listen state. Note that in the example illustrated in FIG. 2, the communication apparatus 101 initially executes the Listen state. However, the communication apparatus 101 may first execute the Search state. Also, before the communication apparatus 101 executes an operation in these states, the communication apparatus 101 may execute a scan operation for detecting another communication apparatus that has already started operation using each channel it can use. In the scan operation, the communication apparatus 101 may select a frequency channel outside of the frequency channel selected for the detection operation of the Listen state or the Search state.

In a similar manner to the communication apparatus 101, when the communication apparatus 102 receives an instruction such as an instruction to detect the other communication apparatus from the user or the like, the communication apparatus 102 attempts to detect the other communication apparatus by repeating a Listen state and a Search state. For example, in the Listen state, the communication apparatus 102 selects 6ch of the 2.4 GHz band and waits for a Probe Request frame from the other communication apparatus. As illustrated in FIG. 2, while the communication apparatus 102 is waiting in the Listen state using 6ch, the communication apparatus 101 transitions to the Search state and transmits a Probe Request frame using 6ch. The communication apparatus 102, in response to receiving the Probe Request frame, transmits a Probe Response frame (F205). The communication apparatus 102 may detect the communication apparatus 101 by receiving a Probe Request frame. Also, the communication apparatus 102 may detect the communication apparatus 101 by receiving a Probe Response frame. The communication apparatus 101 and the communication apparatus 102 may report to the user or the like that the communication apparatus 102 and the communication apparatus 101 have been detected. In this manner, in the detection operation via the first detection method, the communication apparatus 100 may detect the other communication apparatus using a Probe Request frame or a Probe Response frame while repeatedly transitioning between the Listen state and the Search state.

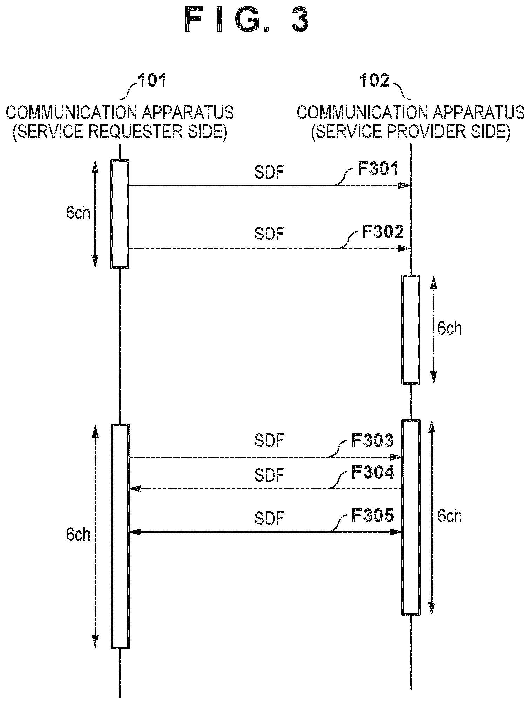

FIG. 3 illustrates an example of a sequence executed between the communication apparatuses 100 in the second detection method. In this example, each communication apparatus 100 executes processing based on whether it is a communication apparatus on the service provider side or a communication apparatus on the service requester side and detects the other communication apparatus. The communication apparatus on the service provider side may be referred to as a Publisher, a Listener, an Advertiser, or the like. The communication apparatus on the service requester side may be referred to as a Subscriber, a Searcher, a Seeker, or the like. For example, the communication apparatus on the service requester side may transmit a frame for detecting the other communication apparatus. Also, the communication apparatus on the service provider side may receive a frame transmitted by the other communication apparatus and respond to it. The role allocated to each communication apparatus 100 may be determined by a higher level layer (service layer or the like). In the example described using FIG. 3, the communication apparatus 101 operates as a communication apparatus on the service requester side and the communication apparatus 102 operates as a communication apparatus on the service provider side. For example, the communication apparatus 101 intermittently executes the detection operation and transmits a frame for detecting the other communication apparatus. The rectangles in FIG. 3 illustrate the detection periods in which each communication apparatus 100 is executing the detection operation. For example, the communication apparatus 101 transmits an SDF using 6ch of the 2.4 GHz band (F301). The SDF is an abbreviation for a Service Discovery Frame. Also, an SDF transmitted from a communication apparatus on the service requester side may be referred to as a Search frame or a Subscribe frame. In one detection period, the communication apparatus 101 may transmit a plurality of SDFs (F301, F302). The detection period may be defined as N × TU as with the Listen state time period in the first detection method. In the initial detection period, at the timing of when the SDF is transmitted by the communication apparatus 101 (F301, F302), since the communication apparatus 102 is not executing the detection operation, the communication apparatus 101 does not obtain a response from the communication apparatus 102. Thus, the communication apparatus 101 does not detect the communication apparatus 102. In the following detection period of the communication apparatus 102, since the communication apparatus 101 is not in a detection period, an SDF is not transmitted from the communication apparatus 101. Thus, the communication apparatus 102 does not detect the communication apparatus 101. Thereafter, in F303, when the communication apparatus 101 transmits an SDF, the communication apparatus 102 receives the SDF. Then, the communication apparatus 102 transmits an SDF as a response to the received SDF. An SDF transmitted from the service provider side may be referred to as a Publish frame or a Follow up frame. Thereafter, a predetermined message exchange using the SDF is executed (F305), and detection of the communication apparatus 102 by the communication apparatus 101 is completed. The communication apparatus 101 detects the communication apparatus 102 by receiving the SDF transmitted by the communication apparatus 102. Also, the communication apparatus 102 may detect the communication apparatus 101 by receiving the SDF transmitted by the communication apparatus 101. The communication apparatus 101 and the communication apparatus 102 may report to the user or the like that they have detected the communication apparatus 102 and the communication apparatus 101, respectively. Note that the communication apparatus 102, which is a communication apparatus on the service provider side, may transmit a Publish SDF in response to receiving a Subscribe SDF from the communication apparatus 101 or may voluntarily transmit a Publish SDF. For example, the communication apparatus 102 may periodically transmit a Publish SDF. In this manner, in the detection process via the second detection method, the communication apparatus 100 may execute processing according to their role on either the service provider side or the service requester side and may detect the other communication apparatus.

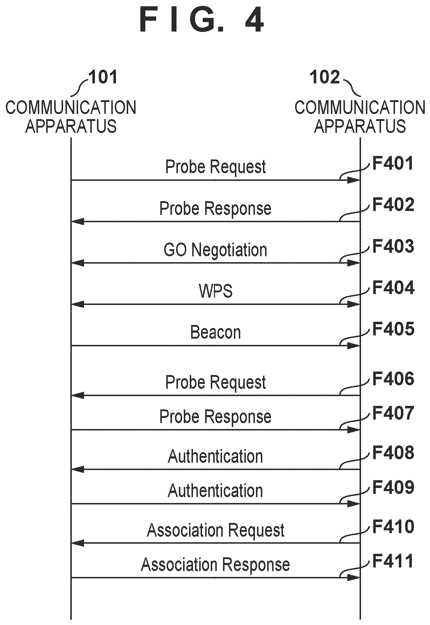

The communication apparatus 100 may execute an establishing process specified in the WFD standard following on from the detection process and may establish a wireless communication link between the communication apparatuses. In the establishing process specified in the WFD standard, the communication parameters used in communication between the communication apparatuses are shared. For example, in WFD R1 in which a communication link is established with a communication apparatus detected using the first detection method, a first establishing process including WPS and GO Negotiation processing may be executed. WPS is an abbreviation for Wi-Fi Protected Setup. FIG. 4 illustrates an example of the first establishing process. The process of FIG. 4 includes a detection operation using the first detection method via transmission of a Probe Request frame by the communication apparatus 101 (F401) and reception of a Probe Response frame by the communication apparatus 102 (F402). When the communication apparatus 101 and the communication apparatus 102 detect the other partner communication apparatus, GO Negotiation processing is executed (F403). In the GO Negotiation processing, it is determined whether one of the communication apparatuses takes the role of the Group Owner (GO) and the other takes the role of the Client (CL). Also, in the GO Negotiation, the frequency channel for the GO to operate on is determined. The GO executes a function corresponding to an AP and periodically transmits a Beacon frame, for example. For example, the communication apparatus 101 may temporarily operate as an AP. Also, the communication apparatus 101 and the communication apparatus 102 share the communication parameters used in executing the WPS processing and communication (F404). Note that the communication apparatus that operates as a GO may notify the communication apparatus operating as a CL of the communication parameters by broadcasting a Beacon. The communication apparatus 101 and the communication apparatus 102 perform link establishment and communication using the communication parameters shared via the WPS processing on the basis of each role determined via GO Negotiation. For example, the GO communication apparatus starts transmission of a Beacon frame (F405). Also, the CL communication apparatus transmits frames for requesting connection such as a Probe Request frame, an Authentication frame, an Association Request frame, and the like (F406, F408, F410). On the other hand, the GO communication apparatus transmits a Probe Response frame, an Authentication frame, and an Association Response frame in response to these frames (F407, F409, F411). Note that these frame may include a Multi-Link element for Multi-Link communication. A Multi-Link element may include a communication parameter used in Multi-Link communication as specified in the IEEE 802.11be standard. Accordingly, a plurality of links can be set between the communication apparatuses via one connection process. For example, a Probe Request frame and a Probe Response frame including a Multi-Link element may be referred to as an ML Probe Request frame and an ML Probe Response frame, respectively. For example, the communication apparatus 101 may be made the GO, and the communication apparatus 102 may be made the CL. The communication apparatus 101 corresponding to the GO may provide the communication parameters to the communication apparatus 102 and build the network 131. On the other hand, the communication apparatus 102 corresponding to the CL may receive the communication parameters from the communication apparatus 101 and join the network 131. In this manner, when a communication link is established between the communication apparatus 101 and the communication apparatus 102, data may be communicated between the communication apparatus 101 and the communication apparatus 102. Note that the communication apparatus 101 and the communication apparatus 102 may execute 4-Way-Hand-Shake (4WHS) processing before data communication is executed.

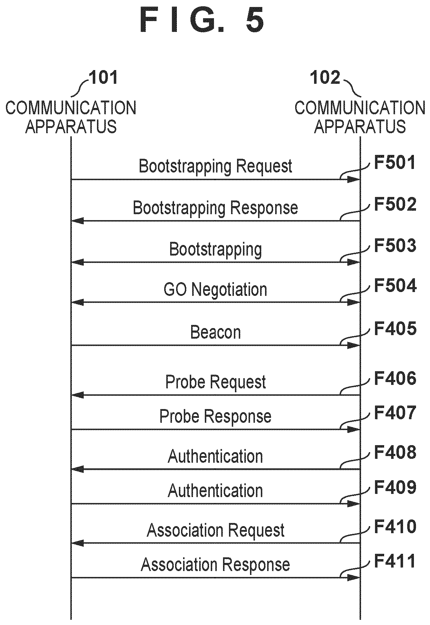

In WFD R2 in which a communication link is established with a communication apparatus detected using the second detection method, a second establishing process including bootstrapping processing and GO Negotiation processing may be executed. FIG. 5 illustrates an example of the second establishing process. The process of FIG. 5 may be executed after the detection operation using the second detection method via transmission and reception of SDFs between the communication apparatus 101 and the communication apparatus 102. In FIG. 5, a process similar to the process of FIG. 4 is given the same reference numbers and description will be omitted. When the communication apparatus 101 and the communication apparatus 102 detect the other partner communication apparatus, bootstrapping processing is executed.

In the bootstrapping processing, the method for exchanging communication parameters may be determined between the communication apparatuses, and the communication parameters may be exchanged using this method. For example, in a case where the method of exchanging communication parameters uses a QR code, one communication apparatus displays a QR code indicating information that can identify the communication parameters, and the other communication apparatus reads the QR code and identifies the communication parameters. In this case, one communication apparatus presents to the partner communication apparatus that they can display the QR code, and the other communication apparatus presents to the partner communication apparatus that they can read the QR code. In this manner, the communication parameter exchange method may be determined. Note that in presenting an exchange method for exchanging the communication parameters, whether or not the QR code can be displayed or read, whether or not support as an NFC tag or reader is possible, whether or not a trigger for the communication parameter exchange via a button press is possible, and the like may be presented. Also, in presenting the exchange method for exchanging the communication parameters, whether or not a passphrase can be displayed or input as a character string, whether or not a passphrase can be displayed or input as a numerical value, whether or not a pincode or passcode can be displayed or input, and the like may be presented. Furthermore, in presenting the exchange method for exchanging the communication parameters, whether or not a method for exchanging a PASN parameter required for using PASN as specified in the WFD standard is supported may be presented. PASN is an abbreviation for Preassociation Security Negotiation. A PASN parameter may include a public key for each communication apparatus, for example. Also, the method for exchanging the PASN parameter may include an exchange method using Bluetooth, for example. Note that the method for exchanging the PASN parameter may or may not be specified in the WFD standard. In other words, as the method for exchanging the PASN parameter, a method not specified in the WFD standard may be used. Note that in presenting an exchange method for exchanging the communication parameters, whether or not the communication parameters can be exchanged via a method different from those described above may be presented. For example, a temporary network including an AP may be formed, and the communication parameters may be exchanged by the communication apparatus connecting to that network. In this case, between the communication apparatuses, it may be determined to exchange the communication parameters using the temporary network including the AP.

The communication parameters exchanged between the communication apparatuses may include a service set identifier (SSID), an encryption method, an encryption key, an authentication method, AKM, a BSSID, a MAC address, and/or other similar parameters used in wireless communication. AKM is an abbreviation for Authentication and Key Management. AKM indicates an authentication protocol or key exchange algorithm used in wireless communication. For example, in a case where AKM is "SAE", the communication parameters may include a password for connecting to the AP or GO corresponding to Wi-Fi Protected Access (WPA) 3. Also, in a case where AKM is "psk", the communication parameters may include a Pre Shared Key (PSK) /passphrase for connecting to the AP or GO corresponding to WPA2. In a case where AKM is "1X", the communication parameters may include an ID, password, public key, and the like for connecting to the AP corresponding to WPA-Enterprise. Note that the password and PSK/passphrase are encryption keys for when executing authentication or key exchange based on WPA or IEEE 802.11.

The communication apparatus 101 transmits a Bootstrapping Request frame (F501). The Bootstrapping Request frame may indicate an exchange method of the communication parameters that can be used by the communication apparatus 101. For example, in a case where the communication apparatus 101 supports display and reading of the QR code, the communication apparatus 101 may present that these can be executed. The communication apparatus 102 responds with a Bootstrapping Response frame (F502). The Bootstrapping Response frame may indicate an exchange method of the communication parameters that can be used by the communication apparatus 102. For example, in a case where the communication apparatus 102 supports display the QR code and NFC tagging, the communication apparatus 102 may present that these can be executed. Note that the communication apparatus 102 may respond on the basis of the communication parameter exchange method reported by the communication apparatus 101. For example, in a case where the communication apparatus 101 supports display and reading of the QR code and the communication apparatus 102 supports display the QR code and NFC tagging, the communication apparatus 102 may present that it can display the QR code and that the communication apparatus 101 can read the QR code. In this manner, the communication parameter exchange method may be determined via an exchange of these frames. The communication apparatus 101 and the communication apparatus 102 share the communication parameters using the determined communication parameter exchange method (F503). For example, the communication parameters are exchanged by the communication apparatus 102 displaying a QR code including information that can identify the communication parameters and the communication apparatus 101 reading the QR code. Also, the communication apparatus 101 and the communication apparatus 102 execute GO Negotiation processing and determine their roles and the channel for the GO to operate on (F504). Note that the communication apparatus 101 and the communication apparatus 102 may each perform authentication on their partner communication apparatus in the GO Negotiation processing. For example, the communication apparatus 101 and the communication apparatus 102 may execute PASN using the PASN parameter exchanged via the bootstrapping processing. In this case, if the authentication of each other via PASN is successful, the subsequent processing is executed. If the authentication fails, the subsequent processing is cancelled. Also, as with the first establishing process, the communication apparatus 101 and the communication apparatus 102 perform connection establishment and communication using the communication parameters shared via the bootstrapping processing on the basis of each role determined via GO Negotiation.

As described above, the communication apparatuses 100 may detect the other communication apparatus according to the WFD standard, may establish a wireless communication link, and may execute communication with each other. Here, in a case where a plurality of methods or processes that are incompatible in terms of operation are specified by the WFD standard, the communication apparatus that can execute only a portion of the methods or processes may be unable to detect or communicate with the other communication apparatus. For example, in a case where the communication apparatus 101 can only execute WFD R2 and the communication apparatus 102 can only execute WFD R1, there is a possibility that the communication apparatus 101 cannot detect the existence of the communication apparatus 102. In other words, in a case where the communication apparatus 101 has transmitted a Service Discovery Frame, since the communication apparatus 102 does not support WFD R2 and thus does not respond to this frame, the communication apparatus 101 cannot detect the communication apparatus 102. Also, in a case where the communication apparatus 102 has transmitted a Probe Request frame, unless the communication apparatus 101 responds to this frame, the communication apparatus 102 cannot detect the communication apparatus 101. In this manner, due to a difference in the detection method specified in the WFD standard supported by each communication apparatus 100, each communication apparatus 100 may be unable to detect the partner communication apparatus.

However, the communication apparatus 100 that supports both WFD R1 and WFD R2 can execute the first detection method and the second detection method in parallel. Thus, this communication apparatus 100 can detect both a communication apparatus that supports WFD R1 and a communication apparatus that supports WFD R2. In this case, the communication apparatus 100 that supports both WFD R1 and WFD R2 may be detected by either a communication apparatus that supports WFD R1 or a communication apparatus that supports WFD R2. Accordingly, with this configuration, even in a case where different methods or processes that are incompatible in terms of operation are specified in the WFD standard, the communication apparatuses using these methods or processes can more easily detect their partner communication apparatus.

Regarding this, in a case where the communication apparatus 100 executes the first detection method and the second detection method in parallel, communication with a portion of the detected communication apparatuses may be unable to be performed. For example, in a case where the communication apparatus 101 and the communication apparatus 102 have different security methods used in communication, the communication apparatus 101 cannot communicate with the communication apparatus 102. For example, in a case where the security method used in communication by the communication apparatus 101 is WPA3 and the security method used in communication by the communication apparatus 102 is WPA2, the communication apparatus 101 and the communication apparatus 102 cannot communicate. Note that WPA is an abbreviation for Wi-Fi Protected Access. Also, the WPS used in WFD R1 is compatible with WPA2 but not compatible with WPA3. Thus, for example, when the communication apparatus 102 that supports WPA2 attempts to establish a connection with the communication apparatus 101 that supports WPA3 via the first establishing process, the connection cannot be made due to the communication apparatus 101 not supporting WPS. In this manner, among the detected communication apparatuses, if there is a communication apparatus that does not support a communication method after connection or an establishing process of a later stage connection, the communication apparatus 100 may be unable to efficiently execute processing until it can communicate with the other communication apparatus. For example, the communication apparatus 101 may attempt an establishing process for a connection with the communication apparatus 102 and, if that fails, may attempt an establishing process for a connection with another communication apparatus. Accordingly, there is a possibility of time being taken until the communication apparatus 101 establishes a connection with the communication apparatus it should connect to.

In light of such circumstances, the communication apparatus according to the present embodiment executes a detection operation on the basis of its set security method in a case where the first establishing process supports a first security method and the second establishing process supports a second security method. For example, the communication apparatus 100 executes the first detection method on the basis of the first security method being set for itself and executes the second detection method on the basis of the second security method being set. The communication apparatus 100 can detect the existence of another communication apparatus using the first detection method using a Probe Request frame and the second detection method using a Service Discovery Frame. Also, the communication apparatus 100 may establish a connection with another detected communication apparatus using the first establishing process associated with the first detection method or the second establishing process associated with the second detection method as the establishing process for establishing a connection with the other communication apparatus. With this configuration, the communication apparatus 100 is configured to be able to execute the first detection method and the second detection method on the basis of the set security method. Accordingly, the communication apparatus 100 stops executing a detection operation using a frequency channel or method via which a communication apparatus that the communication apparatus 100 cannot establish a connection with or communicate with is detected. Thus, detection of another communication apparatus can be efficiently performed.

For example, in a case where the one or more security methods set for the communication apparatus 100 include the second security method and does not include the first security method, the communication apparatus 100 may execute the second detection method and not execute the first detection method. For example, in a case where the one or more security methods set for the communication apparatus 100 include the first security method and the second security method, the communication apparatus 100 may execute the first detection method and the second detection method in parallel. For example, in a case where the first security method is WPA2 and the second security method is WPA3 and the communication apparatus 100 is set with only WPA3, the communication apparatus 100 may execute the detection operation only using the 6ch of the 2.4 GHz band using SDF. In this manner, since a detection operation using another frequency channel that may detect the communication apparatus 100 supporting only WPA2 is not executed, the detection operation can be efficiently executed. On the other hand, in a case where the communication apparatus 100 is set for WPA2 and WPA3, a detection operation using 1ch, 6ch, and 11ch of the 2.4 GHz band may be executed using a Probe Request frame. Also, the communication apparatus 100 may execute a detection operation using an SDF using 6ch of the 2.4 GHz band. Accordingly, the communication apparatus 100 supports the Wi-Fi Direct standard and can widely detect communication apparatuses that can communicate with itself. The apparatus configuration, functional configuration, and processing flow of the communication apparatus 100 according to the present embodiment will be described below.

### Apparatus Configuration

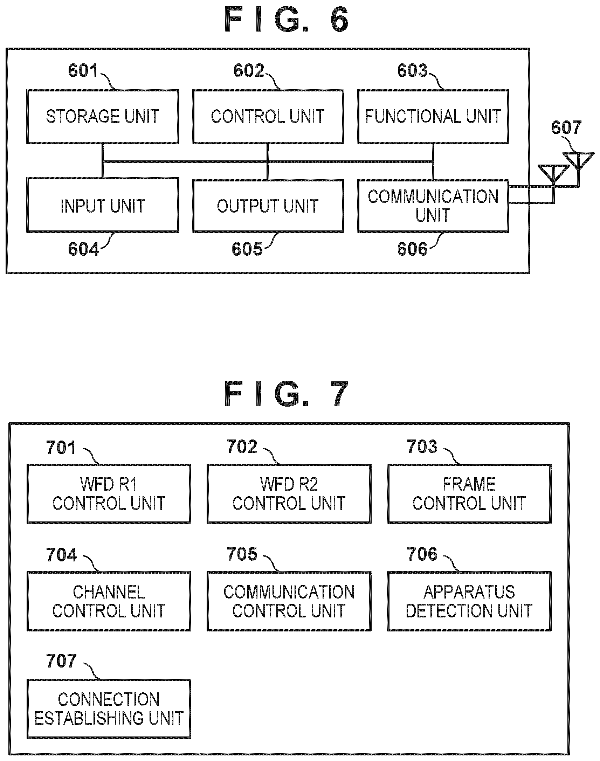

FIG. 6 illustrates an example of the hardware configuration of the communication apparatus 100 according to the present embodiment. The communication apparatus 100, as an example of the hardware configuration, includes a storage unit 601, a control unit 602, a functional unit 603, an input unit 604, an output unit 605, a communication unit 606, and an antenna 607. The communication apparatus 100 may include a plurality of antennas.

The storage unit 601 is constituted by one or more pieces of memory including a ROM, a RAM, and the like and may store various types of information, such as a control program for the functional units forming the communication apparatus 100 to perform various types of operations, parameters for communication, and the like. ROM is an abbreviation for Read Only Memory, and RAM is an abbreviation for Random Access Memory. The storage unit 601, apart from the ROM and RAM, may include a storage medium such as a flexible disk, a hard disk, an optical disk, a magneto-optical disk, a CD-ROM, a CD-R, magnetic tape, a non-volatile memory card, a DVD, and the like. Also, the storage unit 601 may be provided with a plurality of memory devices. Note that the storage unit 601 may store setting information input from the user to the apparatus and information relating to the state of the apparatus such as the remaining life of the battery in the apparatus and whether or not the apparatus is performing power saving operations.

The control unit 602, for example, is constituted by one or more processors including a CPU, an MPU, and the like and controls the entire communication apparatus 100 by executing a control program stored in the storage unit 601. Note that the control unit 602 may control the entire communication apparatus 100 via cooperation of the control program stored in the storage unit 601 and the operating system (OS). Note that CPU is an abbreviation for central processing unit, and MPU is an abbreviation for micro processing unit. In a case where the control unit 602 includes a plurality of processors implemented as a multicore processor, the entire communication apparatus 100 may be controlled by the plurality of processors.

Also, the control unit 602 controls the functional unit 603 and executes predetermined processing, such as wireless communication, image capture, printing, projecting, and the like. The functional unit 603 is hardware for the communication apparatus 100 to execute the predetermined processing described above. For example, in a case where the apparatus is a camera, the functional unit 603 is an imaging unit and executes image capture processing. Also, in a case where the apparatus is a printer, the functional unit 603 is a printing unit and executes printing processing. In a case where the apparatus is a projector, the functional unit 603 is a projecting unit and executes projection processing.

The input unit 604 receives various operations from a user. The output unit 605 outputs to a user via a monitor screen or a speaker, for example. For example, the input unit 604 may accept an input from a user for executing the first detection method and the second detection method in parallel. Here, output via the output unit 605 may correspond to displaying on a monitor screen, outputting audio via a speaker, outputting vibrations, and the like. Note that the input unit 604 and the output unit 605 may be implemented together as one module in the form of a touch panel, for example. Also, the input unit 604 and the output unit 605 may both integrally formed with the communication apparatus 100 or may both be separate apparatuses.

The communication unit 606 performs control of wireless communication compliant with the IEEE 802.11bn standard. Also, the communication unit 606 may perform control of wireless communication that complies with a legacy standard such as another IEEE 802.11 standard series in addition to the IEEE 802.11bn standard and may perform control of wired communication using a wired LAN or the like. The communication unit 606 controls the antenna 607 and transmits and receives signals for wireless communication generated by the control unit 602. The communication unit 606 may be constituted of a plurality of communication circuits corresponding to a plurality of links. The communication unit 606 is a so-called radio chip and may be provided with one or more processors and/or pieces of memory. Note that in a case where the communication apparatus 100, in addition to the IEEE 802.11bn standard, supports another wireless communication standard such as the NFC standard and the Bluetooth standard and supports wired communication via a wired LAN or the like, the communication unit 606 may perform control of communication compliant with these communication standards. Also, in a case where the communication apparatus 100 can execute wireless communication that complies with a plurality of communication standards, the communication apparatus 100 may have a configuration in which the communication unit that supports the communication standards and the antennas are provided separately. The communication apparatus 100 communicates data, such as image data, document data, video data, and the like, to the partner communication apparatus via the communication unit 606. Note that the antenna 607 may be separately formed from the communication unit 606 or may be formed as a single module together with the communication unit 606.

The antenna 607 is an antenna that can communicate at a frequency band including the 2.4 GHz band, the 5 GHz band, the 6 GHz band, the millimeter wave band, and the like. In the configuration illustrated in FIG. 6, the communication apparatus 100 includes two antennas 607. However, the communication apparatus 100 may include one or three or more antennas and may include one or more antennas for each frequency band usable by the apparatus. Also, in a case where the communication apparatus 100 includes a plurality of antennas, the communication apparatus 100 may be provided with the communication unit 606 for each antenna.

### Functional Configuration

The functional configuration of the communication apparatus 100 according to the present embodiment will now be described. FIG. 7 illustrates an example of a block diagram of the communication apparatus 100. The communication apparatus 100 may include a WFD R1 control unit 701, a WFD R2 control unit 702, a frame control unit 703, a channel control unit 704, a communication control unit 705, an apparatus detection unit 706, and a connection establishing unit 707. The WFD R1 control unit 701 executes a detection operation using the first detection method and establishes a connection with a partner communication apparatus using the first establishing process. For example, the WFD R1 control unit 701 may execute a detection operation using a Probe Request frame or a Probe Response frame. Also, the WFD R1 control unit 701 may execute connection establishing using WPS processing or GO Negotiation processing. The WFD R2 control unit 702 executes a detection operation using the second detection method and establishes a connection with a partner communication apparatus using the second establishing process. For example, the WFD R2 control unit 702 may execute a detection operation using an SDF. Also, the WFD R2 control unit 702 may execute connection establishing using bootstrapping processing or GO Negotiation processing.

The frame control unit 703 generates a frame to be used by another functional unit. Also, the frame control unit 703 analyzes received frames. For example, the frame control unit 703 may perform determination of whether to process a frame according to WFD R1 or to process a frame according to WFD R2. The channel control unit 704 performs setting of a frequency channel for executing a detection operation for detecting another communication apparatus and executing communication with a detected communication apparatus. For example, the channel control unit 704 may set a frequency channel to executing a detection operation on the basis of an instruction from a user or the like. The communication control unit 705 transmits a frame generated by the frame control unit using the communication unit 606. Also, the communication control unit 705 notifies the frame control unit 703 of the frame received by the communication unit 606.

The apparatus detection unit 706 detects another communication apparatus using the WFD R1 control unit 701 and/or the WFD R2 control unit 702. For example, the apparatus detection unit 706 may execute a detection operation using the WFD R1 control unit 701 on the basis of its security method being set to the first security method. For example, the apparatus detection unit 706 may execute a detection operation using the WFD R2 control unit 702 on the basis of its security method being set to the second security method. The apparatus detection unit 706 may execute a detection operation using a Beacon frame received by the communication unit 606. For example, in a case where the security method of the apparatus is set to the first security method, the apparatus detection unit 706 may detect another communication apparatus on the basis of a Beacon frame being received. Also, in a case where the security method of the apparatus is set to the second security method, the apparatus detection unit 706 may detect another communication apparatus on the basis of a Beacon frame including information indicating that the other communication apparatus supports the second establishing process being received.

The connection establishing unit 707 establishes a connection with the communication apparatus detected by the apparatus detection unit 706. For example, the connection establishing unit 707 may establish a connection with another communication apparatus using the WFD R1 control unit 701 on the basis of the security method set for the apparatus being the first security method. Also, the connection establishing unit 707 may establish a connection with another communication apparatus using the WFD R2 control unit 702 on the basis of the security method set for the apparatus being the second security method. Note that the connection establishing unit 707 may establish a connection with another communication apparatus using the WFD R1 control unit 701 on the basis of the other communication apparatus being detected via the first detection method. Also, the connection establishing unit 707 may establish a connection with another communication apparatus using the WFD R2 control unit 702 on the basis of the other communication apparatus being detected via the second detection method. The connection establishing unit 707 may execute processing such as authentication processing, association processing, and 4-Way-Hand-Shake (4WHS) processing.

### Processing Flow

The flow of the processing executed by the communication apparatus 100 described above and the sequence between communication apparatuses will now be described.

### First Detection Operation Example

An example of the first detection operation executed by the communication apparatus 100 according to the present embodiment when the existence of another communication apparatus is detected will now be described. In the present example described herein, the first security method and the second security method are set in the communication apparatus 100.

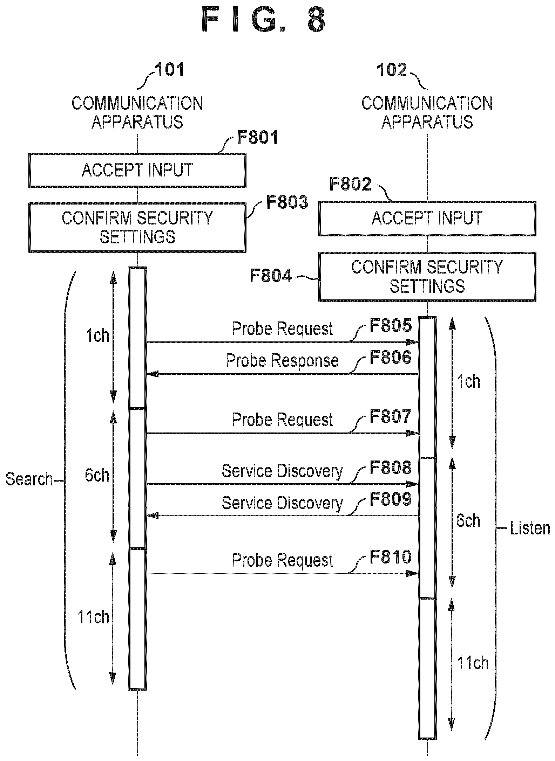

FIG. 8 is a diagram illustrating an example of a message sequence between the communication apparatuses 100 in a case where the first security method and the second security method are set in the communication apparatuses 100. In the present example, the first security method and the second security method are set in the communication apparatus 101 and the communication apparatus 102. The first security method is WPA2, for example. Also, the second security method is WPA3, for example. FIG. 8 is a diagram for describing an example in which the communication apparatus 101 transmits a request frame for detecting another communication apparatus and the communication apparatus 102 responds to the request frame. For example, the communication apparatus 101 executes an operation of the Search state in the first detection method. Also, the communication apparatus 101 executes an operation of the communication apparatus on the service requester side in the second detection method. For example, the communication apparatus 102 may execute an operation of the Listen state in the first detection method. Also, the communication apparatus 102 may execute an operation of the communication apparatus on the service requester side in the second detection method. Note that the communication apparatus 102 may transmit a frame and the communication apparatus 101 may receive and respond to the frame. For example, the communication apparatus 101 may execute an operation of the Search state in the first detection method and an operation of the service provider side in the second detection method. Also, the communication apparatus 102 may execute an operation of the Listen state in the first detection method and an operation of the service requester side in the second detection method.

Note that the first security method and the second security method may be a security method other than WPA2 and WPA3. For example, WPA or WEP may be used. WEP is an abbreviation for Wired Equivalent Privacy. The first security method and the second security method may be a method which is a successor of WPA2 and WPA3. In the first security method and the second security method, a plurality of further subdivided security methods may be included. For example, in WPA3, the WPA3-SAE method and the WPA3-EAP method may be included. In this case, each of the subdivided security methods may correspond to the first security method and the second security method. The communication apparatus 100 may further support a security method other than the first security method and the second security method.

First, the communication apparatus 101 accepts an input from a user, application, or the like (F801). For example, the communication apparatus 101 may accept an instruction to detect another communication apparatus from a user via the input unit 604 or an instruction to connect to another communication apparatus. For example, the communication apparatus 101 may display a button including text such as "Wi-Fi Direct" or a button with a label relating to a Wi-Fi Direct operation on the user interface formed by the output unit 605. Also, the communication apparatus 101 may recognize that the button has been clicked by the user, that Wi-Fi Direct has been selected to be executed, and the like via the input unit 604. Note that the input by the user is not limited to these examples, and it is sufficient that it is displayed on the communication apparatus 100 that the user has input to start detection of another communication apparatus based on the Wi-Fi Direct standard. For example, in a case where the input unit 604 is a microphone, the input by the user may be voice. Note that the communication apparatus 101 may accept an instruction to detect another communication apparatus or an instruction to connect to another communication apparatus from a source other than the user. For example, the communication apparatus 101 may accept an instruction from an application, an OS, or the like. For example, in a case where an application requiring a connection with another communication apparatus is activated, the communication apparatus 101 may accept an instruction to connect to another communication apparatus from the application. The communication apparatus 100 may operate to execute the first detection method and the second detection method in parallel on the basis of a single-time instruction from a user, application, or the like. This can reduce the load on the user to perform operations. Note that the trigger for the communication apparatus 101 to start the processing illustrated in FIG. 8 is not limited to these examples. For example, the communication apparatus 101 may start the detection of another communication apparatus on the basis of the power of the apparatus being switched on and the apparatus being activated.

When an operation for detecting another communication apparatus is started, the communication apparatus 101 may first execute a scan operation to detect another communication apparatus that is operating as a GO (not illustrated). For example, the communication apparatus 101 may wait for a Beacon frame transmitted by another communication apparatus as a scan operation. Also, as a scan operation, the communication apparatus 101 may transmit a Probe Request frame and wait for a Probe Response frame transmitted by another communication apparatus. For example, the communication apparatus 101 may execute a scan operation using each channel usable by the communication apparatus 101. In this manner, in a case where the frequency channels selectable in the Search state of the apparatus are 1ch, 6ch, and 11ch of the 2.4 GHz band, even if another communication apparatus is operating as a GO on a frequency channel other than these, the communication apparatus may be detected. On the other hand, the communication apparatus 101 may execute a scan operation using only a specific frequency channel. By executing a scan operation using only a specific frequency channel, the amount of time required for the scan operation can be reduced. Thus, in a case where another communication apparatus operating as a GO does not exist, the following processing can be expediently executed. For example, the communication apparatus 101 may execute a scan operation using the Preferred Scanning Channels (PSC) of the 6 GHz band. The PSC may be one or more 20Mhz frequency channels set as the frequency channels to prioritize for scanning. For example, the PSC are the frequency channels with the channel numbers of 5, 21, 37, 53, 69, 85, 101, 117, 133, 149, 165, 181, 197, 213, and 229. In a case where another communication apparatus operating as a GO is detected by a scan operation, the communication apparatus 101 may establish a connection with the communication apparatus on the basis of the Wi-Fi Direct standard and may communicate.

Following on from the scan operation, the communication apparatus 101 confirms its security settings (F803). In the present example, the communication apparatus 101 confirms that the first security method and the second security method are set in the communication apparatus 101. The communication apparatus 101 executes a detection operation on the basis of its security settings. In other words, since the security settings of the communication apparatus 101 include the first security method and the second security method, the communication apparatus 101 executes the first detection method and the second detection method in parallel. In this example, the frequency channels used to execute the detection operation using the first detection method are 1ch, 6ch, and 11ch of the 2.4 GHz band. Also, the frequency channel used to execute the detection operation using the second detection method is 6ch of the 2.4 GHz band. In this case, the communication apparatus 101 may operate to transmit a Probe Request frame using 1ch and 11ch and to transmit a Probe Request frame and a Service Discovery Frame using 6ch. For example, the communication apparatus 101 initially transmits a Probe Request frame using 1ch (F805) and then waits to receive a Probe Response frame. Also, the communication apparatus 101 switches the frequency channel to 6ch, transmits a Probe Request frame (F807), and waits to receive a Probe Response frame. Furthermore, the communication apparatus 101 transmits a Service Discovery Frame (F808) and waits to receive a Service Discovery Frame. Then, the communication apparatus 101 switches the frequency channel to 11ch, transmits a Probe Request frame (F810), and waits to receive a Probe Response frame.

On the other hand, similar to the communication apparatus 101, when the communication apparatus 102 accepts an input from a user, application, or the like (F802), the communication apparatus 102 starts a detection operation. For example, when the communication apparatus 102 starts detection of another communication apparatus, the communication apparatus 102 first executes a scan operation. Also, the communication apparatus 102 confirms its security settings (F804). Since the first security method and the second security method are set in the communication apparatus 102, the communication apparatus 102 executes the first detection method and the second detection method in parallel. For example, when the communication apparatus 102 receives a Probe Request frame on 1ch (F805), the communication apparatus 102 transmits a Probe Response frame (F806). When the communication apparatus 102 switches the frequency channel to 6ch and receives a Service Discovery Frame (F808), the communication apparatus 102 transmits a Service Discovery Frame (F809). After the communication apparatus 102 switches the frequency channel to 11ch, if a frame is not received, the communication apparatus 102 may switch to the next frequency channel without transmitting a frame. Note that a Probe Request frame transmitted from the communication apparatus 101 on 6ch while the communication apparatus 102 is waiting on 1ch is not received by the communication apparatus 102 (F807). In a similar manner, a Probe Request frame transmitted from the communication apparatus 101 on 1ch while the communication apparatus 102 is waiting on 6ch is not received by the communication apparatus 102 (F810). Thus, the Probe Response frame for the Probe Request frame is not transmitted. Note that the communication apparatus 102 may stay in the Listen state throughout a predetermined time period without switching the frequency channel. In this case, the communication apparatus 102 may stay in the Listen state on 6ch of the 2.4 GHz band, for example. 6ch of the 2.4 GHz band is a channel recommended for executing a detection process according to WFD R2. This makes detection easier for the communication apparatus 100 that can execute WFD R2. Note that in the example described above, the communication apparatus 102 switches the frequency channels while waiting to receive a frame. However, the communication apparatus 102 may wait to receive a frame while transmitting a frame. For example, the communication apparatus 102 may transmit a Probe Request frame or an SDF. In this manner, a sequence of detection operations using each frequency channel targeted for the detection operations are executed in both the communication apparatus 101 and the communication apparatus 102.

Via the sequence of detection operations described above, the communication apparatus 101 receives a Probe Response frame on 1ch (F806) and receives a Service Discovery Frame on 6ch (F809). Via these frames, the communication apparatus 101 may detect the communication apparatus 102. Note that even in a case where the communication apparatus 101 has received only a Probe Request frame, or even in a case where the communication apparatus 101 has received only a Service Discovery Frame, the communication apparatus 101 may detect the communication apparatus 102. In this manner, in a case where the communication apparatus 102 can execute both the first detection method and the second detection method, the communication apparatus 101 can detect the communication apparatus 102 via at least one of the detection methods. Note that in a case where the communication apparatus 102 can execute only the first detection method, in F809, a Service Discovery Frame is not transmitted in response to the Service Discovery Frame transmitted by the communication apparatus 101 in F808. However, the communication apparatus 101 receives the Probe Response frame transmitted in F806 in response to the Probe Request frame transmitted in F805. In this manner, the communication apparatus 101 can detect the communication apparatus 102. Also, in a case where the communication apparatus 102 can execute only the second detection method, in F806, a Probe Response frame is not transmitted in response to a Probe Request frame transmitted by the communication apparatus 101 in F805. However, the communication apparatus 101 receives the Service Discovery Frame transmitted in F809 in response to the Service Discovery Frame transmitted in F808. In this manner, the communication apparatus 101 can detect the communication apparatus 102.

Also, in a case where the communication apparatus 101 can execute both the first detection method and the second detection method, the communication apparatus 102 can detect the communication apparatus 101 via at least one of the detection methods. Note that in a case where the communication apparatus 101 can execute only the first detection method, in F808, the communication apparatus 101 does not transmit a Service Discovery Frame. However, the communication apparatus 102 responds to the Probe Request frame transmitted in F805 with a Probe Response frame in S806. In this manner, the communication apparatus 102 is detected by the communication apparatus 101. Note that the communication apparatus 102 may detect the communication apparatus 101 by receiving a Probe Request frame. Also, in a case where the communication apparatus 101 can execute only the second detection method, in F805, the communication apparatus 101 does not transmit a Probe Request frame. However, the communication apparatus 102 responds to the Service Discovery Frame transmitted in F808 with a Service Discovery Frame in F809. In this manner, the communication apparatus 101 is detected by the communication apparatus 102. Note that the communication apparatus 102 may detect the communication apparatus 101 by receiving a Service Discovery Frame.

The communication apparatus 100 may repeatedly execute the Listen state and the Search state until a request to establish a connection is received from another communication apparatus. For example, the communication apparatus 100 may repeatedly execute a detection operation via these states until a Probe Request frame, an Association Request frame, or the like is received for requesting to establish a connection. The communication apparatus 100 may repeatedly execute only the Listen state or only the Search state or may execute a detection operation using a combination of these states. Also, the communication apparatus 100 may repeatedly execute a detection operation via the Listen state and the Search state until an instruction to establish a connection is accepted from a user, application, or the like. Note that the instruction to establish a connection may include information that can identify the partner communication apparatus to establish a connection with.

The predetermined time period for the communication apparatus 100 to execute a detection operation using the first detection method and the second detection method on each frequency channel may be preset. For example, the predetermined time period may be 100 msec. The predetermined time period may be longer than 100 msec or may be shorter. For example, the predetermined time period may be a multiple of 100 msec. By using 100 msec as the unit of time and setting the predetermined time period to a multiple of 100 msec, the possibility of detecting another communication apparatus may be increased. The predetermined time period may be different for each frequency channel. For example, in a case where the detection operation is executed using 6ch of the 2.4 GHz band, the predetermined time period may be set to a longer time than the other frequency channels of the 2.4 GHz band, 1ch and 11ch, for example. For example, if the predetermined time period for the other frequency channels is 100 msec, the predetermined time period for 6ch may be 200 msec. Also, the predetermined time period for 6ch may be 100 msec, and the predetermined time period for the other channels may be 50 msec or the like. In this manner, other communication apparatuses that support that second detection method are easier to detect.

After the communication apparatus 100 executes the sequence of detection operations for each frequency channel targeted for the detection operation, the communication apparatus 100 may wait on one or more specific frequency channels. For example, after a detection operation on 11ch as illustrated in FIG. 8, the communication apparatus 101 may select a specific channel and wait to receive a signal from another communication apparatus for a specific time period. In this manner, the possibility of detecting another communication apparatus may be increased. For example, in a case where the communication apparatus 101 and the communication apparatus 102 execute a detection operation while switching the frequency channels at the same timing, they may be unable to detect one another due to the continuous selection of different frequency channels. In such a case, if one of the communication apparatuses 100 waits on a specific channel after executing the sequence of detection operations, the other communication apparatus may be able to be detected. For example, the specific channel may be 6ch of the 2.4 GHz band. In this manner, the possibility of detecting the communication apparatus 100 executing the second detection method is increased. Also, the specific channel may be randomly determined. In this manner, since the communication apparatus waits on different channels each time waiting is executed, the possibility of detecting the communication apparatus executing a detection operation on only a portion of the frequency channels is increased. Also, the specific channel may be a fixed channel. In this manner, in a case where the other communication apparatus is executing a detection operation including this specific channel, the possibility of detection is increased. The specific time period may be a random time period. By making the time periods in which the communication apparatuses 100 wait different, the timings of the switch between frequencies when executing a detection operation can be offset from one another. Thus, the possibility of detecting the other communication apparatus in the detection operation may be increased. Note that the communication apparatus 101 may execute waiting as described above before executing the sequence of detection operations using a frequency channel targeted for detection operation. For example, the communication apparatus 101 may execute the scan operation before executing the sequence of detection operations using a frequency channel targeted for detection operation and then thereafter execute the waiting described above. In this case, the frequency channel used for waiting may be 6ch of the 2.4 GHz band. In this manner, the possibility of the communication apparatus 101 detecting the communication apparatus executing the second detection method may be increased.

For the communication apparatus 100, the frequency channels selected when executing the sequence of detection operations may not be in the order of 1ch, 6ch, and 11ch of the 2.4 GHz band. For example, the communication apparatus 100 may prioritize selection of 6ch of the 2.4 GHz band such that the order is 6ch, 1ch, and 11ch or 6ch, 11ch, and 1ch. In this manner, the communication apparatus executing the second detection method can be detected at an earlier stage. Also, the communication apparatus 100 may select more of the specific frequency channels than other frequency channels when executing the sequence of detection operations. For example, the communication apparatus 100 may execute the detection operation using the order 6ch, 1ch, 6ch, and 11ch so that the number of times 6ch is selected is greater than the number of times that the other frequency channels are selected. In this manner, the communication apparatus executing the second detection method can be prioritized for detection, for example. Note that the frequency channel prioritized for selection is not limited to 6ch of the 2.4 GHz band. For example, in a case where the frequency channel that the other communication apparatus to be detected prioritizes for executing the detection operation is known, the communication apparatus 100 may prioritize the selection of that frequency channel. For example, in a case where it is agreed between the communication apparatus 101 and the communication apparatus 102 to prioritize executing the detection operation using the specific frequency channel, the communication apparatus 101 may prioritize selection of the specific frequency channel. For example, the prioritized frequency channel may be set by a user or application. For example, the prioritized frequency channel may be 7ch of the 6 GHz band.

### Second Detection Operation Example

An example of the second detection operation executed by the communication apparatus 100 according to the present embodiment when the existence of another communication apparatus is detected will now be described. In the present example described herein, the second security method is set in the communication apparatus 100, but the first security method is not set.

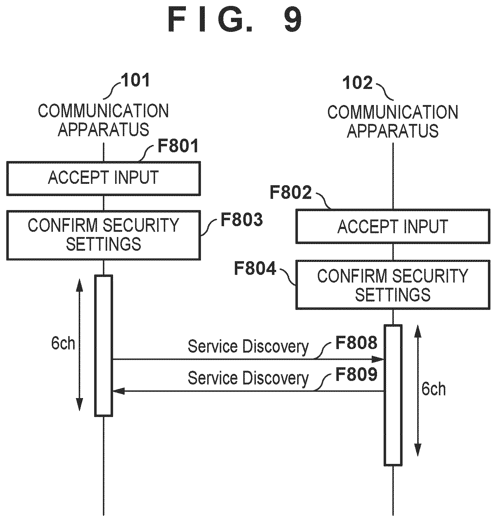

FIG. 9 is a diagram illustrating an example of a message sequence between the communication apparatuses 100 in a case where the second security method is set in the communication apparatus 100 but the first security method is not set. In the present example, the second security method is set in the communication apparatus 101 and the communication apparatus 102, but the first security method is not set. The first security method is WPA2, for example. Also, the second security method is WPA3, for example. In FIG. 9, an operation similar to the operation of FIG. 8 is given the same reference numbers and description will be omitted. For example, when the communication apparatus 101 accepts an input from a user, application, or the like (F801), the communication apparatus 101 confirms its security settings (F803). In the present example, the communication apparatus 101 confirms that the second security method is set in the communication apparatus 101 but that the first security method is not set. Also, the communication apparatus 101 executes a detection operation of the communication apparatus on the service requester side in the second detection method. For example, the communication apparatus 101 transmits an SDF using 6ch of the 2.4 GHz band (F808) and waits to receive an SDF from another communication apparatus.

When the communication apparatus 102 accepts an input from a user, application, or the like (F802), the communication apparatus 102 confirms its security settings (F804). In the present example, the communication apparatus 102 confirms that the second security method is set in the communication apparatus 102 but that the first security method is not set. Also, the communication apparatus 102 executes a detection operation of the communication apparatus on the service provider side in the second detection method. For example, the communication apparatus 102 waits for an SDF from another communication apparatus on 6ch of the 2.4 GHz band and, when the SDF is received (F808), transmits an SDF in response (F809). When the communication apparatus 101 and the communication apparatus 102 detect each other as their partner communication apparatus via reception of the SDFs, the communication apparatus 101 and the communication apparatus 102 notify the user, application, or the like. In a case where an SDF is not received, the communication apparatus 101 and the communication apparatus 102 may execute a detection operation again after a predetermined interval of time. Note that the communication apparatus 102 does not execute a detection operation of the Search state and a detection operation of the Listen state in the first detection method. In this manner, the communication apparatus 101 and the communication apparatus 102 can efficiently execute a detection operation. In a case where the second security method is set in the communication apparatus 101 and the communication apparatus 102 and the first security method is not set, the first detection method is not executed due to being unable to communicate with a communication apparatus detected using the first detection method. In this manner, the communication apparatus 100 can efficiently execute a detection operation. Note that, as in the first detection operation example, when an operation for detecting another communication apparatus is started, the communication apparatus 101 and the communication apparatus 102 may execute a scan operation to detect another communication apparatus that is operating as a GO. Also, an SDF communicated by the communication apparatus 101 and the communication apparatus 102 may be either a Publish frame, a Subscribe frame, or a Follow up frame.

Note that the communication apparatus 102 may receive a frame other than an SDF during execution of the detection operation using 6ch of the 2.4 GHz band. For example, the communication apparatus 102 may receive a Beacon frame, a Probe Request frame, a Probe Response frame, or the like. In such a case, the communication apparatus 102 may respond on the basis of an information element (IE) included in the received frame. For example, the communication apparatus 102 may respond on the basis of whether or not there is an IE associated with the security method, WFD standard establishing process, or the like supported by the communication apparatus that is the transmission source. For example, these frames may include a Robust Security Network Element (RSNE). An RSNE may include information that can identify an AKM indicating the security method supported by the communication apparatus transmitting the frame. Information that can identify an AKM may be referred to as an AKM Suite. For example, in a case where the value of the AKM Suite is 00-0F-AC-02 or 00-0F-AC-05, this may indicate that the communication apparatus supports WPA2. Also, in a case where the value of the AKM Suite is 00-0F-AC-08 or 00-0F-AC-24, this may indicate that the communication apparatus supports WPA3. The communication apparatus 102 may determine whether or not to transmit a Probe Response frame on the basis of the RSNE included in the received Probe Request frame, for example. For example, in a case where the RSNE is used to identify that the communication apparatus 101 supports WPA3, the communication apparatus 102 may determine to transmit a Probe Response frame. On the other hand, in a case where the RSNE included in the received frame is used to identify that the communication apparatus 101 does not support WPA3, the communication apparatus 102 may determine not to transmit a Probe Response frame. In this manner, by responding on the basis of the RSNE information included in the Probe Request frame, the communication apparatus 102 may perform control so that it detected or not detected on the basis of the security method that the communication apparatus 101 supports. For example, by the communication apparatus 102 responding only to a frame including an IE associated with WFD R2, the communication apparatus 102 makes itself unable to be detected by a communication apparatus that cannot communicate with the communication apparatus 102 that supports the second security method.

The IE included in the frame described above is not limited to being an RSNE. For example, the frame described above may include a P2P IE. A P2P IE may include different information depending on the version of the WFD standard supported by the communication apparatus. For example, a P2P IE of the communication apparatus that supports WFD R2 may include P2P Capability Extension Attribute (PCEA) or Pairing Bootstrapping Method Attribute (PBMA). Also, a P2P IE of the communication apparatus that supports WFD R2 may include version information associated with WFD R2. Note that an IE compatible with WFD R2 may be referred to as a P2P R2-compatible IE or an IE specified in the P2P R2 or onward standards. The communication apparatus 102 may determine whether or not respond via a Probe Response frame depending on the P2P IE information included in the received Probe Request frame. For example, in a case where the received frame includes an IE specified in the P2P R2 or onward standards, the communication apparatus 102 may determine to transmit a Probe Response frame. In this case, the Probe Response frame may include an IE specified in the P2P R2 or onward standards. On the other hand, in a case where the received frame does not include an IE specified in the P2P R2 or onward standards, the communication apparatus 102 may determine not to transmit a Probe Response frame. In this manner, the communication apparatus 102 may respond on the basis of the P2P IE information included in the Probe Request frame. In other words, the communication apparatus 101 may perform control to be detected or not detected on the basis of whether the communication apparatus 101 supports WFD R1 or WFD R2.

Note that in a case where the RSNE included in the Beacon frame or the like received from the communication apparatus 101 indicates only support for WPA2, the communication apparatus 102 may execute the subsequent processing assuming that WPA2 and WPA3 are supported. In this case, the communication apparatus 102 may confirm whether or not the communication apparatus 101 supports WPA3 using a P2P IE included in the same frame or a subsequent frame. For example, in a case where the P2P IE indicates that WFD R2 is supported, the communication apparatus 101 may identify that the communication apparatus 101 supports WPA3. Also, in a case where it is indicated that the communication apparatus 101 supports WFD R1 on the basis of the P2P IE included in the same frame or a subsequent frame, the communication apparatus 101 may identify that the communication apparatus 101 supports WPA2.

### Processing Flow of Communication Apparatus

An example of the flow of the processing executed by the communication apparatus 100 when detecting another communication apparatus will now be described. In this example, the communication apparatus 100 can execute an operation to detect another communication apparatus using both the first detection method and the second detection method. Also, in this example, the communication apparatus 100 can connect to the detected communication apparatus using the first establishing process or the second establishing process depending on the method used for detection. The processing may be started by the input by a user, an application, or the like of an instruction to detect another communication apparatus or connect to another communication apparatus. For example, the processing may start when detection of another communication apparatus according to the WFD standard is indicated by a user, an application, or the like.

The communication apparatus 100 first executes a scan operation (S1001). For example, to detect another communication apparatus already operating as a GO, the communication apparatus 100 waits for a Beacon frame or a Probe Response frame on each frequency channel usable by the communication apparatus. In a case where the communication apparatus 100 receives a Beacon frame or a Probe Response frame transmitted from another communication apparatus via the scan operation and the other communication apparatus is detected (YES in S1002), the communication apparatus 100 confirms its security settings (S1014). In a case where the security settings of the communication apparatus 100 support the first security method and the second security method (NO in S1014), the communication apparatus 100 add the detected communication apparatus to a device list to be reported to a user or application. For example, in a case where the communication apparatus 100 supports WPA2 and WPA3, the detected communication apparatus may be added to the device list. On the other hand, in a case where the security settings of the communication apparatus 100 supports the second security method but not the first security method (for example, the communication apparatus 100 supports WPA3 but not WPA2), the communication apparatus 100 determines whether or not to establish a connection with the detected communication apparatus. For example, the communication apparatus 100 determines whether or not an IE of P2P R2 onward is included in the Beacon frame or the Probe Response frame. For example, in a case where an IE of P2P R2 onward is included (YES in S1015), the communication apparatus 100 may determine whether or not there is a combination that can execute bootstrapping between the communication apparatuses. The determination of a combination that can execute bootstrapping will be described later. In a case where the communication apparatus 100 determines that there is a combination that can execute bootstrapping (YES in S1016), the communication apparatus 100 adds the detected communication apparatus to the device list (S1017). In a case where an information element of P2P R2 onward is not included in the received Beacon frame or the like, the communication apparatus 100 does not add the detected communication apparatus to the device list. Also, in a case where the communication apparatus 100 determines that there is not a combination that can execute bootstrapping, the communication apparatus 100 does not add the detected communication apparatus to the device list. In other words, in such cases, the communication apparatus 100 determines that it cannot connect to the detected communication apparatus.

The communication apparatus 100 may present the communication apparatus registered in the device list to the user, application, or the like and may accept a selection of a communication apparatus to establish a connection with. The communication apparatus 100 may use the device name included in the received P2P IE or the P2P Device address of the received frame transmission source as the information for the user or the like to identify the detected communication apparatus. Also, in a case where an SDF is received, the communication apparatus 100 may display the service name included in the received SDF. In a case where a selection of a communication apparatus to establish a connection with is accepted (YES in S1003), the communication apparatus 100 ends or suspends the detection operation of the communication apparatus and executes a process for establishing a connection with the selected communication apparatus. The communication apparatus 100 may continue the detection operation until the selection from the user or the like of a communication apparatus to establish a connection with is accepted (NO in S1003). Note that in a case where the communication apparatus 100 accepts a registration of a communication apparatus to establish a connection with from a user or application in advance and detects the registered communication apparatus, the communication apparatus 100 may execute a process for automatically establishing a connection. In this manner, a connection can be swiftly established without waiting for a selection from the user or application.

Note that the communication apparatus 100 may execute the detection operation described below without executing the scan operation. Also, the communication apparatus 100 may execute the scan operation one or more times. For example, the communication apparatus 100 may execute the scan operation each time the sequence of detection operations is executed. A sequence of detection operations may be the detection operation being executed one or more times using the frequency channel targeted for the detection operation. The communication apparatus 100 may periodically execute the scan operation. Also, the communication apparatus 100 may accept the selection of a communication apparatus from the user or application to establish a connection with and, while the process of establishing a connection with the other communication apparatus is being executed, accept an instruction to cancel the connection establishing process from the user or application. In this case, the communication apparatus 100 may execute the scan operation again or may start the detection operation without executing the scan operation. For example, in a case where the amount of time from when a selection by the user or application of the communication apparatus to establish a connection with is accepted until an instruction to cancel the connection establishing process is accepted is less than a predetermined amount of time, the communication apparatus 100 may start the detection operation without executing the scan operation. On the other hand, in a case where the amount of time from when a selection by the user or application of the communication apparatus to establish a connection with is accepted until an instruction to cancel the connection establishing process is accepted is greater than a predetermined amount of time, the communication apparatus 100 may start the detection operation after executing the scan operation.

Also, the communication apparatus 100 may update the device list. For example, in a case where a new communication apparatus is detected, the communication apparatus 100 may add it to the device list. For example, while the communication apparatus 100 can detect a specific communication apparatus, the communication apparatus 100 may keep the specific communication apparatus in the device list, and the communication apparatus 100 may delete the specific communication apparatus from the device list if a predetermined time period has elapsed since the specific communication apparatus became undetectable. The communication apparatus 100 may store the date and time that the specific communication apparatus was detected. The date and time that the specific communication apparatus was detected may be updated to the last time that the specific communication apparatus was detected. Also, the detected date and time may be stored in association with the detected communication apparatus and displayed to the user or application.

Following on from the scan operation, the communication apparatus 100 confirms its security settings and executes the detection operation on the basis of these settings. For example, in a case where the communication apparatus 100 is set with the first security method and the second security method (NO in S1004), the detection operation is executed using the first detection method and the second detection method (S1005). For example, in a case where the communication apparatus 100 is set with WPA2 and WPA3, the detection operation is executed using the first detection method and the second detection method. In this case, the communication apparatus 100 executes the detection operation using a first frequency channel and a second frequency channel. The second frequency channel may be included in the first frequency channel. For example, the communication apparatus 100 may execute the detection operation using 1ch, 6ch, and 11ch of the 2.4 GHz band as the first frequency channel. Also, the communication apparatus 100 may execute the detection operation using 6ch of the 2.4 GHz band as the second frequency channel. The first frequency channel may include a frequency channel other than the frequency channels described above and may not include one or more or all of the frequency channels described above. The second frequency channel may include two or more frequency channels and may be different from the first frequency channel. The first frequency channel and the second frequency channel may be frequency channels of the 5 GHz band, the 6 GHz band, or the like instead of the 2.4 GHz band. In the present example, 1ch, 6ch, and 11ch of the 2.4 GHz band are set as the first frequency channel, and 6ch is set as the second frequency channel. For example, the communication apparatus 100 may execute the detection operation using a Probe Request frame and an SDF on 1ch, 6ch, and 11ch of the 2.4 GHz band. The communication apparatus 100 may transmit an SDF using 6ch of the 2.4 GHz band and may not transmit an SDF using 1ch and 11ch. The communication apparatus 100 determines whether or not another communication apparatus has been detected using each frequency channel (S1006). For example, by receiving a Beacon frame, a Probe Request frame, a Probe Response frame, or an SDF, the communication apparatus 100 may detect another communication apparatus. In a case where another communication apparatus is detected (YES in S1006), the communication apparatus 100 determines whether or not to add the detected communication apparatus to the device list. For example, in a case where the detected communication apparatus is not registered in the device list (YES in S1007), the communication apparatus 100 may add the detected communication apparatus to the device list (S1008). In a case where the detected communication apparatus is not registered in the device list (NO in S1007), the communication apparatus 100 may not add it. The communication apparatus 100 registers or adds the communication apparatus detected using each frequency channel to the device list, presents this to the user, application, or the like, and determines whether or not there has been a connection destination selection by the user, application, or the like (S1003).

On the other hand, in a case where the communication apparatus 100 is set with the second security method and not set with the first security method (YES in S1004), the detection operation is executed using the second detection method and not the first detection method (S1009). For example, in a case where the communication apparatus 100 is set with WPA3 and not set with WPA2, the detection operation is executed using the second detection method and not the first detection method. In this case, the communication apparatus 100 executes the detection operation using the second frequency channel. The communication apparatus 100 may detect another communication apparatus by receiving an SDF on 6ch of the 2.4 GHz band (S1010). In a case where another communication apparatus is detected (YES in S1010), the communication apparatus 100 determines whether or not to add the detected communication apparatus to the device list. For example, in a case where the detected communication apparatus is not registered in the device list (YES in S1011), the communication apparatus 100 may add the detected communication apparatus to the device list (S1008). In a case where the detected communication apparatus is not registered in the device list (NO in S1011), the communication apparatus 100 may not add it. The communication apparatus 100 registers or adds the communication apparatus detected using each frequency channel to the device list, presents this to the user, application, or the like, and determines whether or not there has been a connection destination selection by the user, application, or the like (S1003). Note that the communication apparatus 100 may receive a Beacon frame, a Probe Request frame, a Probe Response frame, or other similar frame other than an SDF transmitted from another communication apparatus on 6ch of the 2.4 GHz band (YES in S1010). In this case, the communication apparatus 100 determines whether an information element (IE) of P2P R2 onward is included in the received frame. In a case where an IE of P2P R2 onward is included (YES in S1012), the communication apparatus 100 may determine whether or not there is a combination that can execute bootstrapping between the communication apparatuses on the basis of the information included in the IE. The determination of a combination that can execute bootstrapping will be described later. In a case where the communication apparatus 100 determines that there is a combination that can execute bootstrapping (YES in S1013), the communication apparatus 100 adds the detected communication apparatus to the device list (S1007). The communication apparatus 100 registers or adds the detected communication apparatus to the device list, presents this to the user, application, or the like, and determines whether or not there has been a connection destination selection by the user, application, or the like (S1003).

The processing for determining a combination that can execute bootstrapping with another communication apparatus by the communication apparatus 100 will now be described. In the bootstrapping processing, the method for exchanging communication parameters, PASN parameters, and the like may be determined between the communication apparatuses, and the parameters are exchanged using this method. Here, in a case where a combination with a function required for the method for exchanging parameters between the communication apparatuses is presented by each communication apparatus, it may be determined that there is a combination that can execute bootstrapping. On the other hand, in a case where a method for exchanging parameters cannot be executed via the combination of functions presented by each communication apparatus, it may be determined that there is no combination that can execute bootstrapping. For example, for a method for exchanging parameters using a QR code to be executed, one communication apparatus needs to display a QR code and the other communication apparatus needs to read the QR code. Thus, in a case where one communication apparatus presents that it can display a QR code and the other communication apparatus presents that it can read a QR code, it may be determined that there is a combination that can execute bootstrapping. Also, in a case where one communication apparatus presents that it can only display a QR code and the other communication apparatus does not present that it can read a QR code, it may be determined that there is no combination that can execute bootstrapping. For example, in a case where one communication apparatus can display a pincode (or passcode, passphrase, or the like) and the other communication apparatus can input a pincode (or passcode, passphrase, or the like), it may be determined that there is a combination that can execute bootstrapping. For example, in a case where one communication apparatus can display a passphrase and the other communication apparatus can input a passphrase, it may be determined that there is a combination that can execute bootstrapping. For example, in a case where one communication apparatus can operate as an NFC tag and the other communication apparatus can operate as an NFC reader, it may be determined that there is a combination that can execute bootstrapping. In a case where each communication apparatus can execute Opportunistic Bootstrapping, it may be determined that there is a combination that can execute bootstrapping. Also, the exchange of parameters may be executed using Service Managed Bootstrapping executed in a service layer or an application layer. In such a case, if each communication apparatus can exchange parameters using a method defined in the service layer or the application layer, it may be determined that there is a combination that can execute bootstrapping. Note that in a case where a passphrase or a parameter is being exchanged between the communication apparatuses via a different method to the methods described above, it may be determined that there is a combination that can execute bootstrapping. The method of determining that there is a combination that can execute bootstrapping is not limited to those described above, and it is sufficient that a combination of functions required to execute a method for exchanging parameters between the communication apparatuses can be presented by both communication apparatuses. On the other hand, in a case where parameters cannot be exchanged by using any combination of the one or more functions presented by one communication apparatus and the one or more functions presented by the other, it may be determined that there is no combination that can execute bootstrapping.

Note that in the present example, a case in which the communication apparatus 100 is set with the first security method and the second security method and a case in which the communication apparatus 100 is set with the second security method and not the first security method have been described. In a case where the communication apparatus 100 is set with the first security method and not set with the second security method, the communication apparatus 100 may execute a detection operation using the first detection method and execute a detection operation not using the second detection method. In this case, the communication apparatus 100 may execute a detection operation using a Probe Request frame or a Probe Response frame using the first frequency channel. Also, in this case, if the detected communication apparatus supports the first security method, the communication apparatus 100 may add it to the device list on the basis of the IE included in the Beacon frame, Probe Response frame, or the like received in the scan operation. Furthermore, in this case, if the detected communication apparatus supports the first security method, the communication apparatus 100 may transmit a Probe Response frame on the basis of the IE included in the received Beacon frame, Probe Request frame, or the like. Note that the communication apparatus 100 may execute the scan operation before executing the detection operation. For example, the communication apparatus 100 may detect the existence of another communication apparatus by receiving a Beacon frame in the scan operation. With such a configuration, in a case where the communication apparatus 100 supports the first security method and does not support the second security method, another communication apparatus can be efficiently detected.

### Connection Establishing Process

When the communication apparatus 100 detects another communication apparatus, the communication apparatus 100 establishes a connection on the basis of accepting a selection by the user or application or the like. For example, the communication apparatus 100 executes the exchange of parameters such as communication parameters and exchanges frames using these parameters to establish a connection. Also, the communication apparatus 100 communicates with its partner communication apparatus using the exchanged parameters. The communication apparatus 100 may establish a connection using the first establishing process or the second establishing process described above. For example, in a case where another communication apparatus is detected using the first detection method, the communication apparatus 100 may establish a connection using the first establishing process. For example, in a case where a communication apparatus is detected by the communication apparatus 100 receiving a Beacon frame, a Probe Request frame, a Probe Response frame, or the like, the communication apparatus 100 may establish a connection using the first establishing process. Also, in a case where another communication apparatus is detected using the second detection method, the communication apparatus 100 may establish a connection using the second establishing process. For example, in a case where a communication apparatus is detected by the communication apparatus 100 receiving an SDF or the like, the communication apparatus 100 may establish a connection using the second establishing process. Note that the communication apparatus 100 may establish a connection using the second establishing process even in a case where an IE of P2P R2 onward is included in the received Beacon frame, Probe Request frame, Probe Response frame, or the like, for example. Note that the establishing process used by the communication apparatus 100 is not limited to these processes, and another establishing process may be used.

In a case where the first detection method and the second detection method are executed in parallel, the communication apparatus 100 may detect the same communication apparatus via the different detection methods. For example, as illustrated in FIG. 8, the communication apparatus 101 may detect the communication apparatus 102 via the Probe Response frame received in F806 and the SDF received in S809. In this case, the communication apparatus 100 may establish a connection using either the first establishing process or the second establishing process. For example, the communication apparatus 100 may determine the establishing process to use on the basis of a priority order set for the establishing processes. The priority order for the establishing processes may be designated by the user or application, for example. Also, the priority order for the establishing processes may be determined depending on the security strength when executing the establishing process. For example, the second establishing process including authentication via PASN may be given a high priority order, and the first establishing process may be given a low priority order. This can increase the communication safety. Alternatively, a priority order may be set depending on the possibility of success of the establishing process. For example, in the case of using the second establishing process, there is a possibility of there being no combination that can execute bootstrapping. Thus, the first establishing process may be given a high priority order, and the second establishing process may be given a low priority order. This can increase the possibility of success for establishing a connection, allowing for connections to be established swiftly.

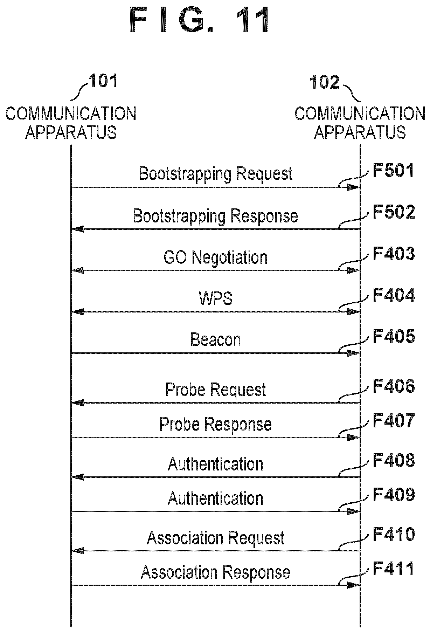

In a case where, as a result of executing an establishing process with a high priority order, a connection cannot be established, the communication apparatus 100 may then execute an establishing process with a low priority order. Note that the communication apparatus 100 may simply provide an order in which to attempt the establishing processes instead of giving each establishing process a priority order. FIG. 11 illustrates an example of a sequence in a case where the communication apparatus 101 attempts to establish a connection with the communication apparatus 102 using the second establishing process and then establishes a connection using the first establishing process. In the present example, as a result of the communication apparatus 101 executing a detection operation using the first detection method and the second detection method, the communication apparatus 102 is detected via each detection method. Also, as a result of the communication apparatus 101 attempting to establish a connection with the communication apparatus 102 using the second establishing process, it is determined that there is no combination that can execute bootstrapping. Then, the communication apparatus 101 establishes a connection with the communication apparatus 102 using the first establishing process on the basis of this determination. Note that in FIG. 11, an operation similar to the operation of FIGS. 4 and 5 is given the same reference numbers and description will be omitted.

First, the communication apparatus 101 presents to the user or application that the communication apparatus 102 has been detected and accepts a selection to establish a connection with the communication apparatus 102. The communication apparatus 101 transmits a Bootstrapping Request frame for executing bootstrapping processing of the second establishing process (F501). The Bootstrapping Request frame may indicate an exchange method of the communication parameters that can be used by the communication apparatus 101. The communication apparatus 102 responds with a Bootstrapping Response frame (F502). The Bootstrapping Response frame may indicate an exchange method of the communication parameters that can be used by the communication apparatus 102. In this example, the communication apparatus 101 determines that there is no combination that can execute a Bootstrapping Response frame between the communication apparatus 101 and the communication apparatus 102 via the received Bootstrapping Response frame. For example, in a case where the communication apparatus 101 cannot execute a method for exchanging the communication parameters with a combination of a function usable by the communication apparatus 101 and a function reported by the communication apparatus 102, the communication apparatus 101 may determine that there is no combination that can execute bootstrapping. In this case, the communication apparatus 101 may switch from the second establishing process to the first establishing process and execute GO Negotiation processing without executing bootstrapping processing (F403). In other words, the communication apparatus 101 determines which communication apparatus to operate as the GO and which communication apparatus to operate as the CL and determines the frequency channel for the GO to operate on. Note that since the communication apparatus 101 did not execute bootstrapping processing and not share the PASN parameter with the communication apparatus 102, the communication apparatus does not execute authentication using PASN. The communication apparatus 101 executes WPS processing according to the role determined by the GO Negotiation processing and shares the communication parameters with the communication apparatus 102 (F404). In a case where the communication apparatus 101 operates as the GO, the communication apparatus 101 broadcasts a Beacon frame using the frequency channel determined in the GO Negotiation processing (F405). The communication apparatus 101 and the communication apparatus 102 establishes a connection using the communication parameters shared in the WPS processing (F406 to F411). In this manner, in a case where another communication apparatus is detected using the first detection method and the second detection method, the communication apparatus 100 may execute the second establishing process and the first establishing process in order. Accordingly, since an attempt to establish a connection is made using one establishing process if the other establishing process cannot be used to establish a connection, the possibility of being able to establish a connection is increased. Also, user-friendliness is improved for the user, application, or the like because they are not presented with the information that connection establishing failed and they are not needed to instruct to establish a connection again.

In a case where a connection cannot be established using one establishing process and the other establishing process is switched to, the communication apparatus 100 may confirm whether or not the partner communication apparatus can execute the other establishing process. For example, in a case where the communication apparatus 101 determines that there is no combination that can execute bootstrapping processing in F502 of FIG. 11, the communication apparatus 101 may confirm whether or not the communication apparatus 102 supports the first establishing process before switching to the first establishing process. For example, the communication apparatus 101 may confirm that the communication apparatus 102 supports the first establishing process by transmitting a Probe Request frame to the communication apparatus 102 and receiving a Probe Response frame from the communication apparatus 102. In this case, the communication apparatus 101 may transmit a Probe Request frame not including an IE of P2P R2 onward to the communication apparatus 102. Then, the communication apparatus 101 may determine that the communication apparatus 102 supports the first establishing process on the basis of the Probe Response frame received from the communication apparatus 102 not including an IE of P2P R2 onward. The method of confirming whether or not the communication apparatus 102 supports the first establishing process is not limited to this method, and the communication apparatus 101 may execute any method that can confirm whether or not the communication apparatus 102 supports the first establishing process.

### Frame Configuration Example

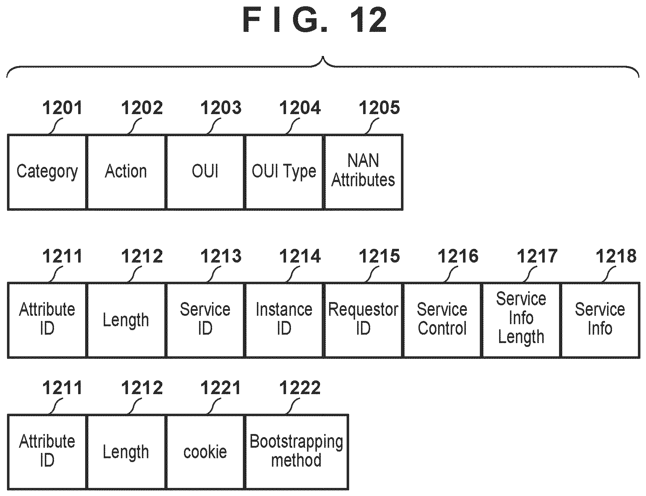

The configuration of the SDF used when the communication apparatus 100 executes the second detection method will now be described. FIG. 12 illustrates an example of the SDF configuration. The SDF may be configured with the format of an Action frame as specified in the IEEE 802.11 standard series. The SDF includes Category field 1201, Action field 1202, OUI field 1203, OUI Type field 1204, and NAN Attributes field 1205. NAN is an abbreviation for neighbor awareness networking. The Category field 1201 and the Action field 1202 are set with the values 0×04 and 0×09, indicating that the frame is a vendor specific Action frame. The OUI field 1203 is set with the value 0×50-6F-9A, indicating that the frame is specified by a standard established by the Wi-Fi Alliance. The OUI Type field 1204 is set with the value 0×13, indicating that the frame is specified by the Wi-Fi Aware standard. Also, the OUI Type field 1204 may indicate the NAN version and type included in the following NAN Attributes field. Note that the OUI Type field 1204 may be set with the value 0×02 or 0×09, indicating that the frame is specified by the Wi-Fi Direct standard.

The NAN Attributes field 1205 may include one or more Attribute. For example the Attributes included in the NAN Attributes field 1205 may be a Service Descriptor Attribute indicating information relating to the service. The Service Descriptor Attribute may include, for example, Attribute ID field 1211, Length field 1212, Service ID field 1213, and Instance ID field 1214. The Service Descriptor Attribute may include Requestor ID field 1215 and Service Control field 1216. The Service Descriptor Attribute may include Service Info Length field 1217 and Service Info field 1218. The Attribute ID field 1211 indicates the type of Attribute and is set with a value of 0×03, indicating that the following field is a Service Descriptor Attribute. The Length field 1212 indicates the length of the Attribute. The Service ID field 1213 indicates the service name provided or requested by the communication apparatus 100. The service name may be represented by a value via hash-based processing. The Instance ID field 1214 indicates an ID allocated to the service managed and provided or requested by the communication apparatus 100. For example, the Instance ID field 1214 may be an Advertise ID or a Seeker ID. The Requestor ID field 1215 may be set with an Instance ID included in a SDF in a case where a SDF is received from the partner communication apparatus. The Service Control field 1216 may include information indicating either Publish, Subscribe, or Follow up, for example. Also, the Service Control field 1216 may indicate whether or not the following Service Info Length field 1217 and Service Info field 1218 exist. The Service Info Length field 1217 indicates the length of the following Service Info field 1218. The Service Info field 1218 indicates information relating to the service. For example, the Service Info field 1218 may include the device name of the communication apparatus 100, a UUID, a service name, a port number, the type of protocol used after connection, and the like. In a case where more information must be included in the Service Info field 1218, the Service Info field 1218 indicates a value of 0×0E. In this case, after this frame, a Service Descriptor Extension Attribute (SDEA) may be included.

The NAN Attributes field 1205 may be a Bootstrapping Method Attribute for reporting the communication parameter exchange method that can be executed by the communication apparatus 100 in the bootstrapping processing. The Bootstrapping Method Attribute may include Attribute ID field 1211, Length field 1212, Cookie field 1221, and Bootstrapping Method field 1222. The Attribute ID field 1211 is set with the value 0×33, indicating that the following field is a Bootstrapping Method Attribute. The Length field 1212 indicates the length of the Attribute. The Cookie field 1221 may be used for maintaining the session with the partner communication apparatus. For example, in a case where the communication apparatus 100 attempts and fails to determine an exchange method using bootstrapping with a specific communication apparatus, the value of the cookie used at this time may also be used when re-attempting to determine the exchange method with the specific communication apparatus. Accordingly, it can be recognized that determining the exchange method is being attempted again with the same communication apparatus and in the same session. The Bootstrapping Method field 1222 indicates the exchange method via bootstrapping that can be executed by the apparatus. The Bootstrapping Method field 1222 may indicate the bootstrapping method desired to be executed by the apparatus. For example, the Bootstrapping Method field 1222 may be represented in a bitmap format. For example, the Bootstrapping Method field 1222 may be configured of 16 bits, and each may indicate whether an exchange method is possible. For example, the 0-th bit may indicate a value of 1 in a case where an exchange method via bootstrapping can be executed via a button press. For example, the 1st bit may indicate a value of 1 in a case where a display of a pincode via a numerical value can be performed. For example, the 2nd bit may indicate a value of 1 in a case where a display of a passphrase including a character string can be performed. For example, the 3rd bit may indicate a value of 1 in a case where a QR code can be displayed. For example, the 4th bit may indicate a value of 1 in a case where an exchange method using an NFC tag can be executed. For example, the 5th bit may indicate a value of 1 in a case where there is a UI for inputting a numerical value. For example, the 6th bit may indicate a value of 1 in a case where a character string can be input as the passphrase. For example, the 7th bit may indicate a value of 1 in a case where there is a camera for reading a QR code. For example, the 8th bit may indicate a value of 1 in a case where the apparatus can operate as an NFC reader. For example, the 14th bit may indicate a value of 1 in a case where a parameter exchange can be executed for a PASN specified in the WFD standard. A PASN parameter exchange may be executed using Bluetooth or the like, for example. For example, the 15th bit may indicate a value of 1 in a case where a connection parameter can be exchanged via a different method. Note that the names of each IE and Attribute included in the format according to the present example are examples, and different names may be used. Also, the arrangement of each IE and Attribute in the format here is an example, and each IE and Attribute may be arranged at appropriate places in or out of the format.

### Accepting Security Settings

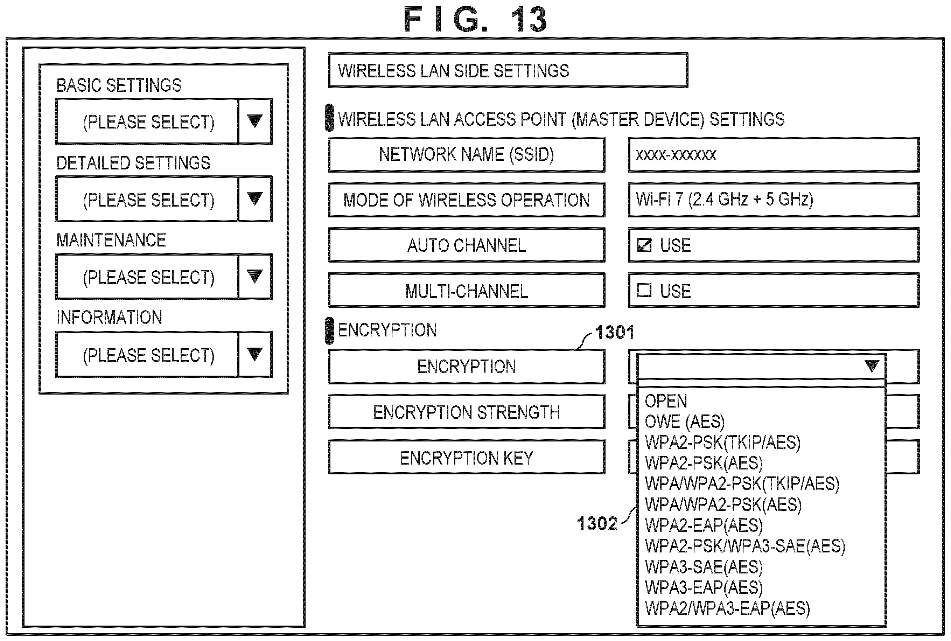

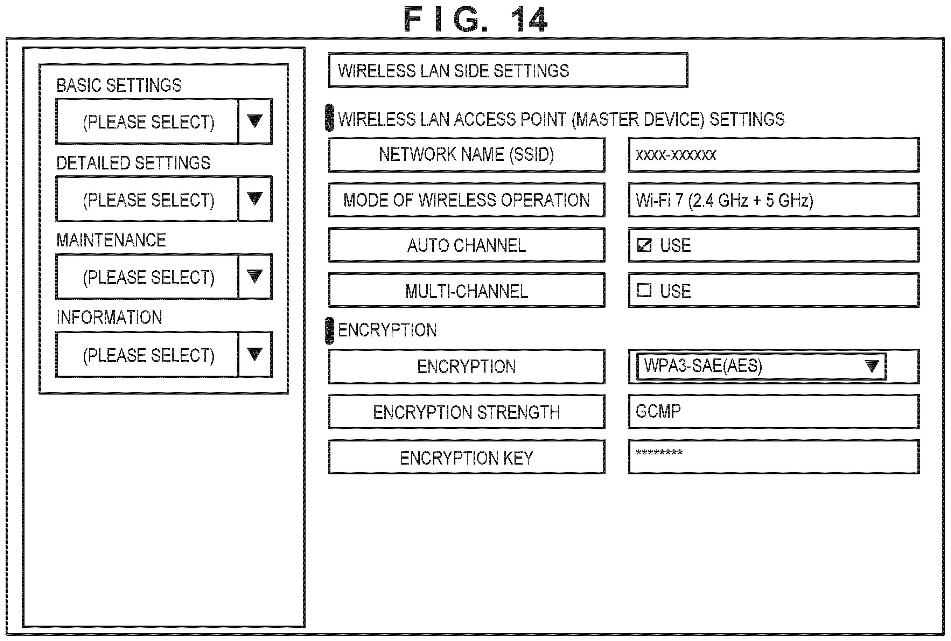

The communication apparatus 100 may accept security settings from the user, application, or the like. For example, the communication apparatus 100 may accept that one or both of the first security method and the second security method are to be used from the user, application, or the like. FIG. 13 illustrates an example of the screen configuration of a user interface for the communication apparatus 100 to accept security method settings from the user. For example, for the communication apparatus 100, the security settings may be accepted by the user selecting one of the security methods displayed in a pull-down list 1302 that is displayed when the user selects a box arranged just to the right of a display 1301 of "Encryption". For example, in a case where one of either WPA2-PSK(TKIP/AES) to WPA2-EAP(AES) is selected, the communication apparatus 100 may accept that WPA2 has been selected as the security method. For example, in a case where either WPA3-SAE(AES) or WPA3-EAP(AES) is selected, the communication apparatus 100 may accept that WPA3 has been selected as the security method. Furthermore, in a case where either WPA2-PSK/WPA3-SAE(AES) or WPA2/WPA3-EAP(AES) is selected, the communication apparatus 100 may accept that WPA2 and WPA3 have been selected as the security method. FIG. 14 illustrates an example in a case where the user selects WPA3-SAE(AES). In this case, the communication apparatus 100 may accept that WPA3 has been selected as the security method. When an instruction to establish a connection with another communication apparatus via Wi-Fi Direct is received from the user or application, the communication apparatus 100 may execute a detection operation using the second detection method and may establish a connection with the detected other communication apparatus using the second establishing process.

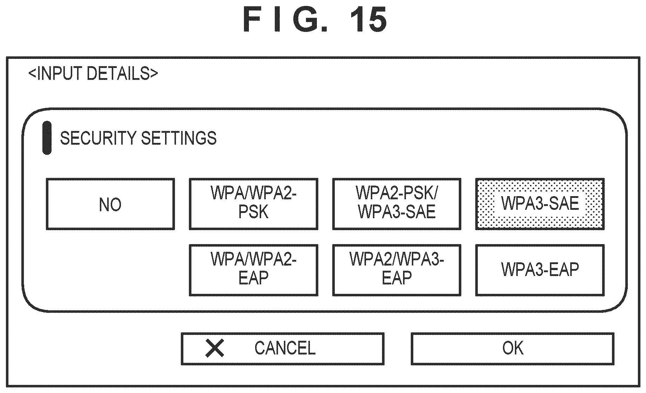

Note that for the communication apparatus 100, the screen for accepting the security settings from the user, application, or the like is not limited to this example. For example, components not included in FIGS. 13 and 14 may be included, and one or more of the components included in FIGS. 13 and 14 may be omitted. The method for the user to input the security settings may not be via a pull-down list. For example, as the method for the user to input the security settings, the selectable security methods may be displayed in advance via radio buttons, a list, or the like, and the user may select from these. FIG. 15 illustrates an example of the screen configuration of another user interface for the communication apparatus 100 to accept the input of security settings from a user. As illustrated in FIG. 15, the security methods settable in the communication apparatus 100 may be configured as buttons. In FIG. 15, the security method currently set in the communication apparatus 100 is indicated via shading. In other words, it is indicated that WPA3-SAE is set in the communication apparatus 100. By the user clicking the button corresponding to another security method, the communication apparatus 100 may accept the setting of another security method. For example, in a case where the button corresponding to WPA2/WPA3-EAP is clicked, the communication apparatus 100 may accept that WPA2 and WPA3 have been selected as the security method. In this case, when an instruction to establish a connection with another communication apparatus via Wi-Fi Direct is received from the user or application, the communication apparatus 100 may execute a detection operation using the first detection method and the second detection method. Also, the communication apparatus 100 may select one of the establishing processes on the basis of the detection method used to detect the other communication apparatus and establish a connection with the detected other communication apparatus.

As described above, the communication apparatus 100 according to the present embodiment executes a detection operation using either the first detection method or the second detection method or using both in parallel on the basis of the security method set as the security method to be used in communication in the apparatus. For example, in a case where the one or more security methods set for the communication apparatus 100 include the second security method and does not include the first security method, the communication apparatus 100 may execute the second detection method and not execute the first detection method. For example, in a case where the one or more security methods set for the communication apparatus 100 include the first security method and the second security method, the communication apparatus 100 may execute the first detection method and the second detection method in parallel. With such a configuration, in a case where the communication apparatus 100 is set with WPA3, the communication apparatus 100 does not execute a detection operation using 1ch and 11ch of the 2.4 GHz band. In this manner, a detection operation using a frequency channel that detects a communication apparatus that the communication apparatus 100 cannot communicate with is not executed. Thus, the amount of time taken by the detection operation is reduced. This allows a connection with the communication apparatus desired by the user to be swiftly established, improving the user-friendliness for the user. Also, since the user is not presented with a communication apparatus that the communication apparatus 100 cannot communicate with, the user-friendliness for the user is improved. Also, in a case where the communication apparatus 100 is set with WPA2 and WPA3, the communication apparatus 100 executes a detection operation using 1ch and 11ch of the 2.4 GHz band. Accordingly, the communication apparatus 100 can detect both a communication apparatus that supports WFD R1 or a communication apparatus that supports WFD R2. Thus, even if a plurality of detection methods and connection establishing processes are specified in the WFD standard, a connection can be made with another communication apparatus without making the user aware. This can improve the user-friendliness for the user. Note that in the present embodiment described above, the first security method is WPA2 and the second security method is WPA3. However, different security methods may be used for each. For example, the second security method may be a standard that is a successor of WPA3 or a non-WPA security method. For example, the second security method may be WPA3 release 3, WPA3 release 4, WPA4, or the like. Also, the first security method may be a WPA security method or a non-WPA security method.

The present disclosure may be implemented by providing a program that implements one or more of the functions of the embodiments described above to a system or a device via a network or a storage medium and the program being read out and executed by one or more processors in a computer of the system or device. Also, the present disclosure may be implemented by a circuit (for example, ASIC) that implements one or more of the functions.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (101) that executes a wireless communication method compliant with a Wi-Fi Direct standard, comprising:
a detecting means (706) configured to detect an existence of an other communication apparatus (102) using a first detection method using a Probe Request frame and a second detection method using a Service Discovery Frame; and
an establishing means (707) configured to establish a connection with the other communication apparatus (102) detected by the detecting means (706) using, as an establishing process for establishing a connection with the other communication apparatus (102), a first establishing process associated with the first detection method or a second establishing process associated with the second detection method, wherein
in a case where, as a security method to be used in communication, the first establishing process supports a first security method and the second establishing process supports a second security method, the detecting means (706)
executes the first detection method, based on the first security method being set in the communication apparatus (101), and
executes the second detection method, based on the second security method being set in the communication apparatus (101).

2. The communication apparatus according to claim 1, wherein
in a case where one or more of security methods set in the communication apparatus as the security method to be used in communication includes the second security method and does not include the first security method, the detecting means executes the second detection method and does not execute the first detection method.

3. The communication apparatus according to claim 1, wherein
in a case where one or more of security methods set in the communication apparatus as the security method to be used in communication includes the first security method and the second security method, the detecting means executes the first detection method and the second detection method in parallel.

4. The communication apparatus according to any one of claims 1 to 3, wherein
the first security method is Wi-Fi Protected Access, WPA, 2, and
the second security method is WPA3.

5. The communication apparatus according to any one of claims 1 to 4, wherein
the detecting means
executes detection of an existence of an other communication apparatus using each of one or more first frequency channels in a case where the first detection method is executed, and
executes detection of an existence of an other communication apparatus using each of one or more second frequency channels included in the first frequency channel in a case where the second detection method is executed.

6. The communication apparatus according to claim 5, wherein
the first frequency channel includes 1ch, 6ch, or 11ch in a 2.4 GHz band.

7. The communication apparatus according to claims 5 or 6, wherein
the second frequency channel includes 6ch in a 2.4 GHz band.

8. The communication apparatus according to any one of claims 1 to 7, wherein
the detecting means, in executing the first detection method, performs transmission of a Probe Request frame and receives a Probe Response frame transmitted from an other communication apparatus after the transmission to detect an existence of the other communication apparatus.

9. The communication apparatus according to any one of claims 1 to 8, wherein
the detecting means, in executing the first detection method, receives a Probe Request frame transmitted from an other communication apparatus to detect an existence of the other communication apparatus.

10. The communication apparatus according to any one of claims 1 to 9, wherein
the detecting means, in executing the second detection method, receives a Service Discovery Frame transmitted from an other communication apparatus to detect an existence of the other communication apparatus.

11. The communication apparatus according to any one of claims 1 to 10, wherein
the detecting means further executes a third detection method for detecting an existence of an other communication apparatus by receiving a Beacon frame including information specified in a Wi-Fi Direct standard transmitted from the other communication apparatus, and
as a security method to be used in communication, the detecting means
detects an existence of the other communication apparatus by receiving the Beacon frame in a case where a first security method is set in the communication apparatus, and
detects an existence of the other communication apparatus by receiving the Beacon frame including information indicating that the other communication apparatus supports the second establishing process in a case where a second security method is set in the communication apparatus.

12. The communication apparatus according to any one of claims 1 to 11, wherein
in a case where the detecting means has received a Probe Request frame from an other communication apparatus, the detecting means
transmits a Probe Response frame based on one or more security methods set in the communication apparatus including the first security method, and
does not transmit a Probe Response frame based on one or more security methods set in the communication apparatus not including the first security method.

13. The communication apparatus according to any one of claims 1 to 12, wherein
in a case where the detecting means has received a Service Discovery Frame that indicates Subscribe from an other communication apparatus, the detecting means
transmits a Service Discovery Frame that indicates Publish based on one or more security methods set in the communication apparatus including the second security method, and
does not transmit a Service Discovery Frame that indicates Publish based on one or more security methods set in the communication apparatus not including the second security method.

14. The communication apparatus according to any one of claims 1 to 13, further comprising:
an accepting means configured to accept input from a user, wherein
the detecting means detects an existence of the other communication apparatus, based on a one-time instruction from the user.

15. A control method executed by a communication apparatus (101) that executes a wireless communication method compliant with a Wi-Fi Direct standard, comprising:
detecting an existence of an other communication apparatus (102) using a first detection method using a Probe Request frame and a second detection method using a Service Discovery Frame; and
establishing a connection with the other communication apparatus (102) detected in the detecting using, as an establishing process for establishing a connection with the other communication apparatus (102), a first establishing process associated with the first detection method or a second establishing process associated with the second detection method, wherein
in a case where, as a security method to be used in communication, the first establishing process supports a first security method and the second establishing process supports a second security method, in the detecting
the first detection method is executed based on the first security method being set in the communication apparatus (102), and
the second detection method is executed based on the second security method being set in the communication apparatus (102).

16. A computer program comprising instructions which, when the program is executed by a computer, cause the computer to carry out the method of claim 15.
